(19) Europäisches Patentamt
European Patent Office
Office européen des brevets

(11) EP 4 451 627 A1

(12) **EUROPEAN PATENT APPLICATION**

(43) Date of publication:
**23.10.2024 Bulletin 2024/43**

(21) Application number: **24164806.2**

(22) Date of filing: **20.03.2024**

(51) International Patent Classification (IPC):
***H04L 25/02*** *(2006.01)*

(52) Cooperative Patent Classification (CPC):
**H04L 25/0204; H04L 25/0222; H04L 25/0228**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.03.2023 KR 20230036889**
**01.08.2023 KR 20230100699**

(71) Applicant: **Samsung Electronics Co., Ltd.**
**Suwon-si, Gyeonggi-do 16677 (KR)**

(72) Inventors:
- **YOON, Hongsik**
**16677 Suwon-si (KR)**
- **IM, Sebin**
**16677 Suwon-si (KR)**
- **KWAK, Gyoungil**
**16677 Suwon-si (KR)**
- **PARK, Jungyong**
**16677 Suwon-si (KR)**
- **KIM, Jinho**
**16677 Suwon-si (KR)**
- **KIM, Hoil**
**16677 Suwon-si (KR)**
- **JE, Huiwon**
**16677 Suwon-si (KR)**

(74) Representative: **Marks & Clerk LLP**
**15 Fetter Lane**
**London EC4A 1BW (GB)**

(54) **USER EQUIPMENT AND OPERATION METHOD THEREOF**

(57) Provided is an operation method of a user equipment performing narrowband Internet of Things-based communication, the operation method including determining a delayed distance based on at least one of a channel characteristic and a channel estimation technique-related coefficient, estimating, based on a time axis, a channel of a target subframe using reference signals of subframes from a start subframe prior to the target subframe to an end subframe corresponding to a determined delayed distance after the target subframe, and decoding the target subframe based on the estimated channel.

FIG. 4

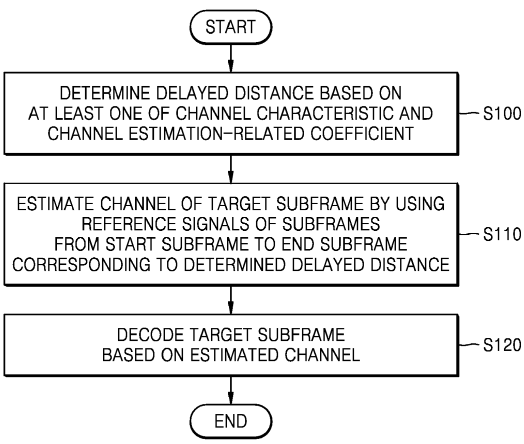


EP 4 451 627 A1

## Description

### BACKGROUND

The present application relates to wireless communication, and more particularly, to a user equipment supporting low-power long-range communication technology and an operation method thereof.

The low-power long-range communication technology is communication technology used in the Internet of Things (IoT) field and has been proposed to satisfy conditions such as low-power consumption, low-cost equipment, low construction costs, stable coverage, and large-scale device connection. As a representative example of low-power long-range communication technology, narrowband IoT communication technology is provided, and the corresponding technology may provide a stable communication service without constructing a separate network for the IoT by using an existing Long Term Evolution (LTE) network. In addition, the narrowband IoT communication technology supports communication using a narrowband and may thus be used for satellite communication requiring low-power long-distance communication.

Since resources to which reference signals used for channel estimation in narrowband IoT communication are allocated are insufficient, and the data rate is low compared to existing radio access technology (RAT), a residual frequency offset between a transmission side and a reception side may greatly affect narrowband IoT communication performance. Therefore, various techniques for overcoming the limitations of insufficient resources and residual frequency offsets for channel estimation in narrowband IoT communication are required.

### SUMMARY

Embodiments provide a user equipment capable of improving decoding performance through highly accurate channel estimation in low-power long-range communication, and an operating method thereof. In particular, embodiments provide a user equipment for effectively performing channel estimation considering a residual frequency offset in narrowband Internet of Things (IoT) communication, and an operation method thereof.

Provided herein is an operation method of a user equipment performing narrowband Internet of Things-based communication, the operation method including: determining a delayed distance based on at least one of a channel characteristic and a channel estimation technique-related coefficient; estimating, with respect to a time axis, a channel of a target subframe using a plurality of reference signals, wherein the plurality of reference signals are comprised in subframes from a start subframe prior to the target subframe to an end subframe corresponding to a determined delayed distance after the target subframe; and decoding the target subframe based on the estimated channel.

Also provided is a user equipment configured to perform a narrowband Internet of Things-based communication, the user equipment including: a transceiver configured to receive a downlink signal including a plurality of subframes through a channel; and a processor configured to use reference signals up to an end subframe corresponding to a delayed distance after a target subframe with respect to a time axis for channel estimation of the target subframe among the plurality of subframes.

Also provided is an operation method of a user equipment performing narrowband Internet of Things-based communication, the operation method including: receiving, from a cell, a downlink signal including a plurality of subframes; determining a residual frequency offset between the cell and the user equipment based on a signal-to-noise ratio of the downlink signal; determining a delayed distance for a target subframe from among the plurality of subframes based on the residual frequency offset; estimating, with respect to a time axis, a channel of the target subframe based on a channel estimation technique established using reference signals up to an end subframe corresponding to the delayed distance after the target subframe; and decoding the target subframe based on the estimated channel.

At least some of the above and other features of the invention are set out in the claims.

### BRIEF DESCRIPTION OF THE DRAWINGS

Embodiments will be more clearly understood from the following detailed description taken in conjunction with the accompanying drawings in which:

FIG. 1 is a diagram illustrating a wireless communication system according to an embodiment;
FIG. 2 is a block diagram illustrating an example of a user equipment implemented according to an embodiment;
FIG. 3 is a diagram illustrating a basic structure of a time-frequency domain that is a radio resource region in a wireless communication system;
FIG. 4 is a flowchart illustrating an operation method of a user equipment according to an embodiment;
FIG. 5 is a graph illustrating an operation method of a user equipment according to an embodiment;
FIG. 6A is a flowchart illustrating an operation method of a user equipment according to an embodiment, and FIG.

6B is a diagram illustrating channel estimation information referenced when performing operation S103a of FIG. 6A;
FIG. 7A is a flowchart illustrating an operation method of a user equipment according to an embodiment, and FIG. 7B is a diagram illustrating channel estimation information referenced when performing operation S102b of FIG. 7A;
FIGS. 8A and 8B are diagrams for describing examples in which a user equipment performs channel estimation for a first target subframe by using an infinite impulse response (IIR) filter according to an embodiment;
FIGS. 9A and 9B are diagrams for describing examples in which a user equipment performs channel estimation for a second target subframe by using an IIR filter according to an embodiment;
FIGS. 10A and 10B are diagrams for describing examples in which a user equipment performs channel estimation for a first target subframe by using a moving average filter according to an embodiment;
FIGS. 11A and 11B are diagrams for describing examples in which a user equipment performs channel estimation for a second target subframe by using a moving average filter according to an embodiment;
FIG. 12 is a flowchart illustrating an operation method of a user equipment according to an embodiment;
FIG. 13 is a flowchart illustrating an operation method of a user equipment according to an embodiment;
FIG. 14 is a diagram for describing target subframes having different delayed distances according to an embodiment;
FIG. 15 is a block diagram schematically illustrating an electronic device according to an embodiment; and
FIG. 16 is a conceptual diagram illustrating an example Internet of Things (IoT) network system to which embodiments may be applied.

## DETAILED DESCRIPTION OF THE EMBODIMENTS

FIG. 1 is a diagram illustrating a wireless communication system (WCS) according to an embodiment. Hereinafter, embodiments are described around a narrowband Internet of Things (IoT) communication-based WCS, but the technical concepts of embodiments are not limited to narrowband IoT-based communication. Specifically, the technical ideas of embodiments may be applied to various types of low-power long-range communication with a similar technical background or channel setting. Furthermore, the technical ideas of the embodiments may be applied to other WCSs, such as wireless broadband (WiBro), global system for mobile communication (GSM), cellular communication systems such as 5G and 6G, or near field communication systems such as Bluetooth and near field communication (NFC). As discussed herein, a "narrowband" channel may be a channel in which the bandwidth of the communication does not exceed (or does not significantly exceed) the coherence bandwidth of the channel (i.e. that it is sufficiently narrow that its frequency response is substantially flat). As discussed herein, Internet of Things (IoT) communication may refer to communication between devices that have may sensors and/or actuators and that may pass sensor measurements and/or commands across an IoT network. This may relate to "smart" enabled devices.

Moreover, various functions described below may be implemented or supported by artificial intelligence technology or one or more computer programs, each of which consists of computer-readable program code and is embodied in a computer-readable medium. The terms "application" and "program" refer to one or more computer programs, software components, instruction sets, procedures, functions, objects, classes, instances, related data, or parts of them suitable for implementation of suitable computer readable program code. The term "computer-readable program code" includes all types of computer code, including source code, object code, and execution code. The term "computer-readable media" includes any type of media that may be accessed by a computer, such as read only memory (ROM), random access memory (RAM), hard disk drives, compact discs (CDs), digital video discs (DVDs), or any other type of memory. A "non-transitory" computer readable medium excludes wired, wireless, optical, or other communication links that transmit transitory electrical signals or other signals. A non-transitory computer readable medium includes media where data can be permanently stored and media where data can be stored and later overwritten, such as a rewritable optical disc or an erasable memory device.

In embodiments described below, a hardware approach will be described as an example. However, since the embodiments include technology that uses both hardware and software, the embodiments do not exclude a software-based approach.

Referring to FIG. 1, a WCS may include a cell 12 (or a serving cell) and a user equipment 14. The cell 12 may generally refer to a fixed station in communication with the user equipment 14 and/or another base station (not shown) and may exchange control information and data with the user equipment 14 and/or the other base station (not shown) by communicating therewith. For example, the cell 12 may be referred to as a node B, an evolved-node B (eNB), a next generation node B (gNB), a sector, a site, a base transceiver system (BTS), an access point (AP), a relay node, a remote radio head (RRH), a radio unit (RU), a small cell, a wireless device, or the like.

The user equipment 14 may be fixed or mobile and may refer to any devices capable of communicating with the cell 12 to transmit and receive data and/or control information to and from the cell 12. For example, the user equipment 14 may be referred to as a terminal, terminal equipment, a mobile station (MS), a mobile terminal (MT), a user terminal (UT), a subscriber station (SS), a wireless device, a handheld device, or the like.

The cell 12 may transmit a downlink signal DLS including a plurality of subframes to the user equipment 14 within its coverage 10. As used herein, a subframe may refer to a data signal carried over a time-frequency resource corresponding to the subframe.

When receiving the downlink signal DLS, the user equipment 14 may estimate channels corresponding to each of the plurality of subframes and decode the plurality of subframes based on the estimated channels. As used herein, a channel corresponding to a subframe may mean a channel that the subframe experiences, and may also be referred to as a channel of a subframe. In addition, in this disclosure, a target subframe may mean a subframe selected as a channel estimation target or a decoding target among a plurality of subframes of a downlink signal DLS, and the subframes may be sequentially selected as target subframes.

In an embodiment, the user equipment 14 may determine a delayed distance DD on the basis of at least one of a channel characteristic and a channel estimation technique-related coefficient, between the cell 12 and the user equipment 14 in order to estimate a channel of a target subframe. In this disclosure, the delayed distance DD may mean a distance on a time axis between an end subframe and a target subframe used to estimate the channel of the target subframe.

In an embodiment, the channel characteristic may include a residual frequency offset between a downlink signal DLS transmitted from the cell 12 on the transmission side and a downlink signal DLS received at the user equipment 14 on the reception side. In this disclosure, the residual frequency offset may refer to an offset remaining without being completely removed due to a hardware limit even when the user equipment 14 performs a calibration operation in order to remove a frequency offset, which is the frequency difference between the transmission-side cell 12 and the reception-side user equipment 14. The residual frequency offset may also be referred to as the residual frequency offset between the cell 12 and the user equipment 14. That is, a residual frequency offset may be generated by a channel via which the downlink signal DLS passed, and the size of the generated residual frequency offset may be related to the characteristics of the channel. In some embodiments, the characteristics of the channel may include a characteristic of the channel that changes over time, that is, a time-varying characteristic.

In an embodiment, the user equipment 14 may measure the received downlink signal DLS to obtain a signal to noise ratio and determine a residual frequency offset based on the signal to noise ratio. In some configurations, the user equipment 14 may measure the received downlink signal DLS in various ways and determine a residual frequency offset based on the measurement result. As used herein, an operation of determining a residual frequency offset may be understood as an operation of predicting a residual frequency offset. That is, since the residual frequency offset may not be accurately measured by the user equipment 14, the residual frequency offset may be determined or predicted according to the signal to noise ratio.

In an embodiment, the user equipment 14 may determine the delayed distance DD based on the determined residual frequency offset. As a specific example, the length of the delayed distance DD may be proportional to the size of the determined residual frequency offset. In some configurations, the user equipment 14 may determine the delayed distance DD by additionally considering the time-varying characteristic of the channel together with the residual frequency offset. As a specific example, as the degree of change in the channel on the time axis increases, the length of the delayed distance DD determined by the residual frequency offset may be adjusted to be shorter. However, this is only an example embodiment, and the embodiments are not limited thereto. That is, the user equipment 14 may determine a delayed distance DD on the basis of various characteristics of a channel in a narrowband.

The user equipment 14 may estimate a channel of the target subframe based on a predetermined channel estimation technique. In an embodiment, when the channel estimation technique is a channel technique using an infinite impulse response (IIR) filter, the user equipment 14 may determine a delayed distance DD based on the IIR coefficient (or the coefficient of the IIR filter) and the residual frequency offset described above. In some embodiments, the IIR coefficient may be set to any one of a plurality of values, and the user equipment 14 may determine the delayed distance DD by confirming the value set in the IIR coefficient. The IIR coefficient is an example of a channel estimation technique-related coefficient. In an embodiment, when the channel estimation technique is a channel technique utilizing a moving average filter (or a finite impulse response (FIR) filter), the user equipment 14 may determine the delayed distance DD based on the residual frequency offset described above.

In one example, the IIR filter implements a phase lock loop (PLL) function and the delayed distance DD, corresponding to a coherence time (see the description of FIG. 5 below), is inferred from the coefficients of the IIR filter. In an example, the PLL is trained using an error signal produced by comparing known reference symbols with observed, received, reference symbols. The error is thus dependent on the frequency offset.

In an embodiment, the user equipment 14 may estimate the channel of the target subframe by using the reference signals of the subframes from the start subframe to the end subframe spaced apart from the target subframe at the delayed distance DD. As used herein, the reference signal may also be referred to as a narrowband reference signal (NRS). Subframes in which reference signals are arranged among subframes from a start frame to an end subframe may be defined by a standard specification related to a narrowband IoT of the 3rd generation partnership project (3GPP) release. In an embodiment, the start subframe may be determined in advance by a position (or time index) of the target subframe, a channel estimation technique, or the like.

In an embodiment, the user equipment 14 may estimate the channel of the target subframe by respectively applying the IIR coefficient-based values to the channel estimates associated with the reference signals and sequentially summing the applied results, in the channel technique using the IIR filter. Equation 1 related to the above is as follows.

[Equation 1]

$$\tilde{h}_n = CE\big((1-\alpha)\tilde{y}_{n+DD-1} + \alpha y_{n+DD}\big)$$

$\tilde{h}_n$ may mean a channel of the target subframe, $\alpha$ may mean an IIR coefficient, $y_{n+DD}$ may mean a signal corresponding to the end subframe, $\tilde{y}_{n+DD-1}$ may mean a signal accumulated by a method similar to Equation 1 from the start frame to the subframe immediately before the end subframe, and *CE*() may mean a function defined for channel estimation.

In an embodiment, the user equipment 14 may estimate the channel of the target subframe by averaging channel estimates associated with at least one window determined from subframes from the start subframe to the end subframe in a channel estimation technique using a moving average filter (or finite impulse response (FIR) filter). Equation 2 related to the above is as follows.

[Equation 2]

$$\tilde{h}_n = CE\left(\sum_{i=-X_0}^{X_1} w_i y_{n+i}\right)$$

$h_n$ may mean a channel of the target subframe, $y_{n+i}$ may mean a signal corresponding to a subframe spaced apart by *i* from the target subframe, $w_i$ may mean a weight for average operation, $-X_0$ and $X_1$ may mean values for pointing to subframes included in at least one window, and *CE*() may mean a function defined for channel estimation.

For example, a length of the window is approximately equal to the coherence time of the channel (see the discussion of FIG. 5 below).

In an embodiment, the user equipment 14 may determine respective delayed distances with respect to subframes of the downlink signal DLS and estimate channels of the subframes based on the determined delayed distances. The user equipment 14 may decode the subframes based on the estimated channels.

The user equipment 14 according to an embodiment may improve the accuracy of channel estimation of the target subframe by using the reference signals of the subframes after the target subframe to estimate the channel of the target subframe considering the characteristics of the channel in the narrowband, thereby improving the overall decoding performance of the user equipment 14.

FIG. 2 is a block diagram illustrating an example of a user equipment 100 implemented according to an embodiment. An implementation example of the user equipment 100 of FIG. 2 may be applied to the user equipment 14 of FIG. 1.

Referring to FIG. 2, the user equipment 100 may include a plurality of antennas 101_1 to 101_k, a transceiver 110, a processor 120, and a memory 130.

The transceiver 110 may receive a downlink signal transmitted by a cell through the antennas 101_1 to 101_k. The transceiver 110 may frequency-down-convert the received downlink signal to generate intermediate frequency or baseband signals. The processor 120 may generate data signals by filtering, decoding, and digitizing intermediate frequencies or baseband signals. The processor 120 may perform a predetermined operation based on the data signals.

In addition, the processor 120 may encode, multiplex, and analog-convert data signals generated through a predetermined operation. The transceiver 110 may frequency-up-convert the intermediate frequency or baseband signals output from the processor 120 and transmit the frequency-up-converted signal through the antennas 101_1 to 101_k as an up-link signal.

However, this is only an embodiment, and the embodiments are not limited thereto. That is, the user equipment 100 may further include an additional integrated circuit (not shown) configured to perform some of the operations of the processor 120 described above.

In an embodiment, the processor 120 may include channel estimating circuitry 122, and the channel estimating circuitry 122 may perform channel estimation according to embodiments. Hereinafter, the operation of the channel estimating circuitry 122 to be described may be understood as the operation of the processor 120. Specifically, the channel estimating circuitry 122 may be implemented in hardware or stored in the memory 130 as program code executed by the processor 120 to perform channel estimation according to embodiments. The channel estimating circuitry 122 may be otherwise known as a channel estimation module.

The channel estimating circuitry 122 may sequentially select a plurality of subframes of the downlink signal received through the transceiver 110 as target subframes to perform channel estimation. In an embodiment, the channel estimating circuitry 122 may determine a delayed distance based on at least one of a channel characteristic and a coefficient related to a channel estimation technique, and estimate a channel of the target subframe by using reference signals up to the end subframe matching the determined delayed distance.

In an embodiment, the memory 130 may store channel estimation information 132 referred to by the channel estimating circuitry 122 to determine a delayed distance of a target subframe.

In an embodiment, when performing channel estimation using an IIR filter, the channel estimating circuitry 122 may determine the delayed distance based on the residual frequency offset and IIR coefficient between the cell and the user equipment 100. In an embodiment, the channel estimating circuitry 122 may determine the delayed distance by checking the delayed distance mapped to the residual frequency offset and the IIR coefficient with reference to the channel estimation information 132.

In an embodiment, when performing channel estimation using a moving average filter (or an FIR filter), the channel estimating circuitry 122 may determine a delayed distance based on the residual frequency offset between the cell and the user equipment 100. In an embodiment, the channel estimating circuitry 122 may determine the delayed distance by checking the delayed distance mapped to the residual frequency offset with reference to the channel estimation information 132.

In some embodiments, the weights of the moving average filter are weights configured to provide a channel estimate with a highest signal to noise ratio (SNR); the weights may be stored in a table, with the table entries indexed by a coherence time (see the discussion of FIG. 5 below).

However, this is only an embodiment, and the channel estimating circuitry 122 may use a delayed distance output by inputting at least one of a residual frequency offset and an IIR coefficient to a neural network model.

FIG. 3 is a diagram illustrating a basic structure of a time-frequency domain that is a radio resource region in a WCS.

Referring to FIG. 3, the horizontal axis may represent a time domain and the vertical axis may represent a frequency domain. The minimum transmission unit in the time domain is an Orthogonal Frequency Division Multiplexing (OFDM) symbol, in which $N_{symb}$ OFDM symbols 202 may be gathered to form one slot 206. Two slots may be gathered to form one subframe 205. For example, the length of the slot 206 may be 0.5 ms and the length of the subframe 205 may be 1.0 ms. However, this is only an embodiment, and the length of the slot 206 may vary depending on the configuration of the slot 206, and the number of slots 206 included in the subframe 205 may vary depending on the length of the slot 206. In addition, in a new radio (NR) network, a time-frequency domain may be defined around the slot 206. In addition, the radio frame 214 may be a unit of a time domain consisting of a number of subframes 205 (e.g. ten subframes 205).

The minimum transmission unit in the frequency domain is a subcarrier, and the bandwidth of the entire system transmission band may be composed of a total of $N_{BW}$ subcarriers 204. The basic unit of a resource in the time-frequency domain is a resource element (RE) 212, which may be represented by an OFDM symbol index and a subcarrier index. A resource block (RB) 208 may be defined by Nsymb consecutive OFDM symbols 202 in the time domain and $N_{RB}$ consecutive subcarriers 210 in the frequency domain. Accordingly, one RB 208 may be composed of (Nsymb * $N_{RB}$) REs 212. An RB pair may include (Nsymb * 2 $N_{RB}$) REs 212 in contiguous units of two RBs on a time axis.

In narrowband IoT communication according to an embodiment, the basic structure of the time-frequency domain disclosed with reference to FIG. 3 may be used.

FIG. 4 is a flowchart illustrating an operation method of a user equipment according to an embodiment. Hereinafter, an embodiment of channel estimation and decoding for a target subframe among a plurality of subframes will be described.

Referring to FIG. 4, in operation S100, the user equipment may determine a delayed distance corresponding to the target subframe based on at least one of a characteristic of a channel with a serving cell and a coefficient related to a channel estimation technique.

In operation S110, the user equipment may estimate the channel of the target subframe by using the reference signals of the subframes from the start subframe to the end subframe matching the determined delayed distance.

In operation S120, the user equipment may decode the target subframe based on the estimated channel.

FIG. 5 is a graph illustrating an operation method of a user equipment according to an embodiment. Although FIG. 5 is a schematic view for facilitating understanding of a channel estimation method with respect to a target subframe of a user equipment, the embodiments are not limited thereto.

Referring to FIG. 5, assuming a channel characteristic in which a predetermined residual frequency offset exists, the phases of the estimated channels of the subframes may correspond to a first line L1.

For example, when an nth subframe #n is a target subframe, the phase of the channel of the target subframe #n estimated using the reference signals of the subframes up to the target subframe #n may have a first value P#n in the channel characteristic where the predetermined residual frequency offset exists and may have a second value P#n+DD in the channel characteristic where the residual frequency offset does not exist. In other words, the first value P#n and the second value P#n+DD may have a certain difference Diff, which may reduce the accuracy of the channel estimation for the target subframe #n.

In some embodiments, the delayed distance DD is a coherence time of the fading channel through which the reference signals have passed. If a frequency offset occurs due to, for example, Doppler effect, this offset can be estimated over a period of time during which the channel does not change significantly, the coherence time. Averaging observations separate by more than the coherence time averages channel effects which are not related to each other, and does not improve an estimate of the frequency offset.

Furthermore, the phase of the channel of the target subframe #n estimated by using the reference signals of the subframes from the target subframe #n to the end subframe #n+DD spaced apart at the delayed distance DD may have a second value P#n+DD in the channel characteristic in which the predetermined residual frequency offset exists, which may correspond to a second value P#n+DD, which is an estimated phase of the channel of the target subframe #n in the channel characteristic in which there is no residual frequency offset.

That is, a user equipment according to embodiments may determine a delayed distance DD based on the residual frequency offset and accurately measure a channel of the target subframe #n by using the reference signals of the subframes from the target subframe #n to the end subframe #n+DD spaced apart at the determined delayed distance DD.

FIG. 6A is a flowchart illustrating an operation method of a user equipment according to an embodiment, and FIG. 6B is a diagram illustrating channel estimation information referenced when performing operation S103a of FIG. 6A.

Referring to FIG. 6A, in operation S101a, the user equipment may measure a signal-to-noise ratio for a downlink signal to determine a residual frequency offset between the serving cell and the user equipment. In some configurations, the user equipment may measure the reception power for a downlink signal to determine a residual frequency offset. In addition, the user equipment may variously measure the downlink signal to determine a residual frequency offset based on a measurement result.

In operation S102a, the user equipment may check a currently set IIR coefficient. In an embodiment, the IIR coefficient may be set to any one of a plurality of values, and the user equipment may check the value of the current IIR coefficient to determine the delayed distance in operation S103a. For example, the IIR coefficient may be set to any one of 1/4, 1/8, and 1/16.

In operation S103a, the user equipment may determine the delayed distance for the target subframe based on the residual frequency offset determined in operation S101a and the IIR coefficient confirmed in operation S102a. In an embodiment, the user equipment may input the determined residual frequency offset and the identified IIR coefficient to a neural network model and determine a delayed distance on the basis of the output from the neural network model. The neural network model may be a model trained using multiple training data composed of various residual frequency offsets and IIR coefficients with various values. The neural network model may be trained to predict a delayed distance based on an input comprising a determined residual frequency offset and an identified IIR coefficient. The neural network may be trained using a training method that updates (e.g. optimizes) parameters of the neural network based on an objective function. The training updates may aim to minimize an error in the prediction of the neural network based on labelled training data (i.e. training data comprising known inputs (residual frequency offset and identified IIR coefficient) and corresponding ground-truth outputs (known/measured delayed distance)).

In addition, referring further to FIG. 6B, the user equipment may determine the delayed distance by referring to a first table TB1 corresponding to the channel estimation information stored in the memory. The first table TB1 may include a residual frequency offset range field, an IIR coefficient field, and a delayed distance field.

In an embodiment, the determined residual frequency offset belongs to a first residual frequency offset range R11, and a delayed distance of a value of V111 may be mapped to a case having a value in which the current IIR coefficient is 1/4. The determined residual frequency offset belongs to the first residual frequency offset range R11, and a delayed distance of a value of V211 may be mapped to a case having a value in which the current IIR coefficient is 1/8. The determined residual frequency offset belongs to the first residual frequency offset range R11, and a delayed distance of a value of V311 may be mapped to a case having a value in which the current IIR coefficient is 1/16.

In an embodiment, the determined residual frequency offset belongs to a second residual frequency offset range R21, and a delayed distance of a value of V121 may be mapped to a case having a value in which the current IIR coefficient is 1/4. The determined residual frequency offset belongs to the second residual frequency offset range R21, and a delayed distance of a value of V221 may be mapped to a case having a value in which the current IIR coefficient is 1/8. The determined residual frequency offset belongs to the second residual frequency offset range R21, and a delayed distance of a value of V321 may be mapped to a case having a value in which the current IIR coefficient is 1/16.

In an embodiment, the determined residual frequency offset belongs to an mth residual frequency offset range Rm1, and a delayed distance of a value of V1m1 may be mapped to a case having a value in which the current IIR coefficient is 1/4. The determined residual frequency offset belongs to the mth residual frequency offset range Rm1, and a delayed distance of a value of V2m1 may be mapped to a case having a value in which the current IIR coefficient is 1/8. The determined residual frequency offset belongs to the mth residual frequency offset range Rm1, and a delayed distance of a value of V3m1 may be mapped to a case having a value in which the current IIR coefficient is 1/16.

However, FIG. 6B is only an example embodiment, and the embodiments are not limited thereto. That is, the delayed distance may be mapped to less or more cases.

Referring back to FIG. 6A, in operation S111a, the user equipment may estimate a channel for the target subframe using the determined delayed distance and IIR coefficient. In an embodiment, the user equipment may estimate the channel for the target subframe based on the reference signals of the subframes from the start subframe to the end subframe matching the determined delayed distance and the IIR coefficient of the IIR filter.

FIG. 7A is a flowchart illustrating an operation method of a user equipment according to an embodiment, and FIG. 7B is a diagram illustrating channel estimation information referenced when performing operation S 102b of FIG. 7A. Hereinafter, for convenience of description, redundant description with respect to FIGS. 6A and 6B will be omitted.

Referring to FIG. 7A, in operation S101b, the user equipment may determine a residual frequency offset between the serving cell and the user equipment by measuring a signal-to-noise ratio for a downlink signal.

In operation S 102b, the user equipment may determine a delayed distance for the target subframe based on the residual frequency offset determined in operation S101b.

Referring further to FIG. 7B, the user equipment may determine the delayed distance by referring to a second table TB2 corresponding to the channel estimation information stored in the memory. The second table TB2 may include a residual frequency offset range field and a delayed distance field.

In an embodiment, a delayed distance of a value of V12 may be mapped to a case in which the determined residual frequency offset belongs to a first residual frequency offset range R12. A delayed distance of a value of V22 may be mapped to a case in which the determined residual frequency offset belongs to a second residual frequency offset range R22. A delayed distance of a value of Vp2 may be mapped to a case in which the determined residual frequency offset belongs to a pth residual frequency offset range Rp2.

However, FIG. 7B is only an example embodiment, and the embodiments are not limited thereto. That is, the delayed distance may be mapped to less or more cases.

In operation S111b, the user equipment may determine at least one window according to the delayed distance determined in operation S 102b. In an embodiment, a user equipment may determine at least one window from subframes from a start subframe to an end subframe that corresponds to a determined delayed distance. In some embodiments, reference signals may be arranged in all subframes included in at least one window. In this case, the user equipment may check the indices of the promised subframes so that the reference signals are reliably arranged based on the standard specification of the 3GPP release, and determine at least one window based on the checked result.

In operation S112b, the user equipment may estimate the channel for the target subframe using at least one window determined in operation S11 1b and a moving average filter.

FIGS. 8A and 8B are diagrams for describing examples in which a user equipment performs channel estimation for a first target subframe by using an IIR filter according to an embodiment. Although in FIGS. 8A and 8B the downlink signal is shown to include the first to fourth frames, this is only an embodiment and the embodiments are not limited thereto.

Referring to FIG. 8A, a narrowband IoT downlink signal may include synchronization signals (i.e., a narrowband-primary synchronization signal (hereinafter, NB-PSS) and a narrowband-secondary synchronization signal (hereinafter, NB-SSS), a physical broadcast channel (i.e., narrowband-physical broadcast channel (hereinafter, NB-PBCH), a system information block (i.e., narrowband-system information block (hereinafter, NB-SIB1), a control channel (i.e., narrowband-physical downlink control channel (hereinafter, NB-PDCCH), and a data channel (i.e., narrowband-physiological downlink shared channel (hereinafter, NB-PDSCH). Furthermore, a minimum system bandwidth of 200 kHz (or 180 kHz) may be used in both downlinks and uplinks in narrowband IoT communication.

The NB-PSS, the NB-SSS, and the NB-PBCH may be allocated to resources that do not conflict with legacy LTE signals. For example, the NB-PSS may be arranged in a sixth subframe (#5), a sixteenth subframe (#15), a 26th subframe (#25), and a 36th subframe (#35) at a period of every 10 ms corresponding to the length of one frame. For example, the NB-SSS may be arranged in the twentieth subframe (#19) and the 40th subframe (#39) at a period of every 20 ms corresponding to the length of the two frames. For example, the NB-PBCH may be arranged in a first subframe (#0), an eleventh subframe (#10), a 21st subframe (#20), and a 31st subframe (#30) at a period of every 10 ms corresponding to the length of one frame. However, the arrangement example shown in FIG. 8A is only an embodiment, and the embodiments are not limited thereto. The arrangement shown in FIG. 8A may be in accordance with the narrowband IoT-related standard specifications of the 3 GPP release.

A first target subframe may correspond to a 25th subframe #24 as NB-SIB1. The user equipment may determine a delayed distance DD for channel estimation for the 25th subframe #24.

In an embodiment, the user equipment may determine a delayed distance DD having a value of 10 based on the residual frequency offset of less than 20 Hz and the IIR coefficient of 1/8. In an embodiment, the user equipment may estimate the channel of the 25th subframe #24 by using the reference signals of the subframes #0 to #34 from the first subframe #0, which is the start subframe, to the 35th subframe #34, which is the end subframe matching the delayed distance DD and the IIR coefficient of 1/8 (that is, the subframe at a delayed distance DD of 10 from the target subframe #24). In some embodiments, a subframe other than the first subframe #0 may be set as the start subframe.

In an embodiment, reference signals may be arranged only in some of the subframes #0 to #34, and the user equipment may selectively estimate the channel of the 25th subframe #24 by using the subframes in which the reference signals are arranged.

Referring further to FIG. 8B, the user equipment may determine the delayed distance DD having a value of 6 based on the residual frequency offset of 20 Hz or more and the IIR coefficient of 1/4. In an embodiment, the user equipment may estimate the channel of the 25th subframe #24 by using the reference signals of the subframes #0 to #30 from the first subframe #0, which is the start subframe, to the 31st subframe #30, which is the end subframe matching the delayed distance DD and the IIR coefficient of 1/4 (that is, the subframe at a delayed distance DD of 6 from the target subframe #24). In some embodiments, a subframe other than the first subframe #0 may be set as the start subframe.

FIGS. 9A and 9B are diagrams for describing examples in which a user equipment performs channel estimation for a second target subframe by using an IIR filter according to an embodiment. Hereinafter, for convenience of description, redundant description with respect to FIGS. 8A and 8B will be omitted.

Referring to FIG. 9A, the second target subframe may be an NB-PDCCH or an NP-PDSCH, which corresponds to the 19th subframe #18. The user equipment may determine a delayed distance DD for channel estimation for the 19th subframe #18.

In an embodiment, the user equipment may determine a delayed distance DD having a value of 3 based on the residual frequency offset of less than 20 Hz and the IIR coefficient of 1/8. In an embodiment, the user equipment may estimate the channel of the 19th subframe #18 by using the reference signals of the subframes #0 to #21 from the first subframe #0, which is the start subframe, to the 22nd subframe #21, which is the end subframe matching the delayed distance DD and the IIR coefficient of 1/8 (that is, the subframe at a delayed distance DD of 3 from the target subframe #18). In some embodiments, a subframe other than the first subframe #0 may be set as the start subframe.

Referring further to FIG. 9B, the user equipment may determine the delayed distance DD having a value of 1 based on the residual frequency offset of 20 Hz or more and the IIR coefficient of 1/4. In an embodiment, the user equipment may estimate the channel of the 19th subframe #18 by using the reference signals of the subframes #0 to #19 from the first subframe #0, which is the start subframe, to the 20th subframe #19, which is the end subframe matching the delayed distance DD and the IIR coefficient of 1/4 (that is, the subframe at a delayed distance DD of 1 from the target subframe #18. In some embodiments, a subframe other than the first subframe #0 may be set as the start subframe.

FIGS. 10A and 10B are diagrams for describing examples in which a user equipment performs channel estimation for a first target subframe by using a moving average filter according to an embodiment. Hereinafter, for convenience of description, redundant description with respect to FIGS. 8A and 8B will be omitted.

Referring to FIG. 10A, the first target subframe may correspond to a 25th subframe #24 as NB-SIB1. The user equipment may determine a delayed distance DD for channel estimation for the 25th subframe #24.

In an embodiment, the user equipment may determine a delayed distance DD having a value of 10 based on the residual frequency offset of less than 20 Hz. In an embodiment, the user equipment may determine first to fifth windows WD11, WD21, WD31, WD41, and WD51 from a thirteenth subframe #12, which is a start subframe, to a 35th subframe #34, which is an end subframe corresponding to a delayed distance DD (that is, the subframe at a delayed distance DD of 10 from the target subframe #24).

In an embodiment, the first window WD11 includes thirteenth to fifteenth subframes #12, #13, and #14, the second window WD21 includes 20th to 23rd subframes #19, #20, #21, and #22, the third window WD31 includes the 25th subframe #24, which is the first target subframe, the fourth window WD41 includes the 31st and 32nd subframes #30 and #31, and the fifth window WD51 may include the 34th and 35th subframes #33 and #34.

In an embodiment, reference signals may be arranged in subframes #12, #13, #14, #19, #20, #21, #22, #24, #30, #31, #33, and #34 included in the first to fifth windows WD11, WD21, WD11, WD41, and WD51.

In an embodiment, the user equipment may estimate the channel of the 25th subframe #24 by performing an average operation after applying predetermined weights to channel estimates respectively corresponding to the first to fifth windows WD11, WD21, WD31, WD41, and WD51 using a moving average filter. In an embodiment, the respective weights corresponding to the first to fifth windows WD11, WD21, WD31, WD41, and WD51 may be the same as or different from each other. In some embodiments, the respective weights corresponding to the first to fifth windows WD11, WD21, WD31, WD41, and WD51 may be set on the basis of a distance spaced away from the first target subframe #24 and the like. In addition, in some embodiments, the numbers of respective subframes included in the first to fifth windows WD11, WD21, WD31, WD41, and WD51 may be the same as or different from each other.

Referring further to FIG. 10B, the user equipment may determine the delayed distance DD having a value of 7 based on the residual frequency offset of 20 Hz or more. In an embodiment, the user equipment may determine first to third windows WD12, WD22, and WD32, from subframes #19 to #31 from a 20th subframe #19, which is a start subframe, to a 32nd subframe #31, which is an end subframe corresponding to a delayed distance DD (that is, the subframe at a delayed distance DD of 7 from the target subframe #24).

In an embodiment, the first window WD12 may include 20th to 23rd subframes #19, #20, #21, and #22, the second window WD22 may include the 25th subframe #24, which is the first target subframe, and the third window WD32 may include 31st and 32nd subframes #30 and #31.

As an embodiment, reference signals may be arranged in subframes #19, #20, #21, #22, #24, #30, and #31 included in the first to third windows WD12, WD22, and WD32.

In an embodiment, the user equipment may estimate the channel of the 25th subframe #24 by performing an average operation after applying predetermined weights to channel estimates respectively corresponding to the first to third windows WD12, WD22, and WD32 using the moving average filter.

FIGS. 11A and 11B are diagrams for describing examples in which a user equipment performs channel estimation for a second target subframe by using a moving average filter according to an embodiment.

Referring to FIG. 11A, the second target subframe may be an NB-PDCCH or an NP-PDSCH, which corresponds to the 19th subframe #18. The user equipment may determine a delayed distance DD for channel estimation for the 19th subframe #18.

In an embodiment, the user equipment may determine a delayed distance DD having a value of 6 based on the residual frequency offset of less than 20 Hz. In an embodiment, the user equipment may determine the first window WD13 from the subframes #11 to #24 from the twelfth subframe #11, which is the start subframe to the 25th subframe #24, which is the end subframe matching the delayed distance DD (that is, the subframe at a delayed distance DD of 6 from the target subframe #18).

In an embodiment, the first window WD13 may include 12th to 25th subframes #11 to #24. In an embodiment, reference signals may be arranged in subframes #11 to #24 included in the first window WD13.

In an embodiment, the user equipment may estimate a channel of the 19th subframe #18 by performing an average operation on a channel estimate of the first window WD13 by using the moving average filter.

Referring further to FIG. 11B, the user equipment may determine the delayed distance DD having a value of 4 based on the residual frequency offset of 20 Hz or more. In an embodiment, the user equipment may determine the first window WD14 from the subframes #13 to #22 from the 14th subframe #13, which is the start subframe, to the 23th subframe #22, which is the end subframe matching the delayed distance DD (that is, the subframe at a delayed distance DD of 4 from the target subframe #18).

In an embodiment, the first window WD14 may include 14th to 23rd subframes #13 to #22. In an embodiment, reference signals may be arranged in subframes #13 to #22 included in the first window WD14.

In an embodiment, the user equipment may estimate a channel of the 19th subframe #18 by performing an average operation on a channel estimate of the first window WD14 by using the moving average filter.

The embodiments disclosed with reference to FIGS. 8A to 11B are examples and embodiments may be applied to various arrangement examples of narrowband IoT communication.

FIG. 12 is a flowchart illustrating an operation method of a user equipment according to an embodiment.

Referring to FIG. 12, in operation S200, the user equipment may determine a delayed distance corresponding to the target subframe based on at least one of a characteristic of a channel with a serving cell and a coefficient related to a channel estimation technique.

In operation S210, the user equipment may shorten the delayed distance determined to reduce power loss in the channel estimation process of the target subframe. In other words, when the delayed distance exceeds the critical distance, the phase between the channel estimate corresponding to the end subframe side and the channel estimate corresponding to the start subframe side exceeds 90 degrees, resulting in power loss when summing the vector of the channel estimates. Accordingly, the user equipment may adjust the determined delayed distance to be less than the threshold distance.

In an example, minimizing the power loss may be done by finding that time (coherence time) corresponding to a length of averaging for which maximum power is obtained for the best offset found with an IIR implementing a PLL.

In operation S210, the user equipment may estimate the channel of the target subframe by using the reference signals of the subframes from the start subframe to the end subframe matching the adjusted delayed distance.

In operation S230, the user equipment may decode the target subframe based on the channel estimated in operation S220. For example, the received samples of the target subframe are compensated with channel estimate in order to reduce the effect of the channel on the received samples, and the resulting compensated samples are decoded.

FIG. 13 is a flowchart illustrating an operation method of a user equipment according to an embodiment.

Referring to FIG. 13, in operation S300, the user equipment may select a target subframe for channel estimation from among a plurality of subframes.

In operation S310, the user equipment may determine whether the type of signal included in the target subframe is a type that requires reception feedback. For example, when a serving cell and a user equipment are promised to give, within a specific feedback transmission deadline, to the serving cell, feedback informing that a corresponding signal has been received, the user equipment may check whether the signal included in the target subframe is an NB-PDCCH or an NB-PDSCH.

When the result of operation S310 is the YES case, operation S320 follows, and the user equipment may determine a delayed distance for the target subframe based on the feedback transmission deadline.

Otherwise, when the result of operation S310 the NO case, operation S330 follows, and the user equipment may determine the delayed distance without any restrictions on feedback transmission.

FIG. 14 is a diagram for describing target subframes having different delayed distances according to an embodiment.

Referring to FIG. 14, the first to third target subframes #11, #12, and #13 may be the NB-PDCCH or NB-PDSCH. The feedback transmission deadline for feedback (e.g. acknowledgement) to the serving cell that the first to third target subframes #11, #12, and #13 have been received may be up to a time corresponding to the 22nd subframe #21, and accordingly, the user equipment may determine the first to third delayed distances DD1, DD2, and DD3 corresponding to the first to third target subframes #11, #12, and #13 differently to be 10, 9, and 8, respectively (e.g. to be equal to the difference (the number of subframes) between the feedback transmission deadline and the respective target subframe).

FIG. 15 is a block diagram schematically illustrating an electronic device 1000 according to an embodiment. The electronic device 1000 of FIG. 15 may be a user equipment according to an embodiment.

Referring to FIG. 15, the electronic device 1000 may include a memory 1010, a processor unit 1020, an input/output control unit 1040, a display unit 1050, an input device 1060, and a communication processing unit 1090. Here, a plurality of memories 1010 may exist. Each component will be described as follows.

The memory 1010 may include a program storage unit 1011 for storing a program for controlling the operation of the electronic device 1000 and a data storage unit 1012 for storing data generated during program execution. The data storage unit 1012 may store data necessary for operations of an application program 1013 and a channel estimation program 1014 or may store data generated from the operation of the application program 1013 and the channel estimation program 1014.

The program storage unit 1011 may include the application program 1013 and the channel estimation program 1014. Here, the program included in the program storage unit 1011 may be expressed as an instruction set of instructions. The application program 1013 may include program code for performing various applications operating in the electronic device 1000. That is, the application program 1013 may include code (or commands) related to various applications driven by a processor 1022.

According to embodiments, the channel estimation program 1014 may determine a delayed distance for channel estimation of the target subframe during narrowband IoT communication and estimate the channel of the target subframe using reference signals up to the end subframe matching the delayed distance. The processor 1022 may perform channel estimation on target subframes according to the embodiments described above by executing the channel estimation program 1014.

In addition, the electronic device 1000 may include a communication processing unit 1090 that performs a communication function for voice communication and data communication. A peripheral device interface 1023 may control a connection among the input/output control unit 1040, the communication processing unit 1090, the processor 1022, and a memory interface 1021. The processor 1022 controls a plurality of base stations to provide a corresponding service using at least one software program. In this case, the processor 1022 may execute at least one program stored in the memory 1010 to provide a service corresponding to the program.

The input/output control unit 1040 may provide an interface between an input/output device such as the display unit 1050 and the input device 1060 and the peripheral device interface 1023. The display unit 1050 displays state information, input characters, moving pictures, and still pictures thereon. For example, the display unit 1050 may display application program information driven by the processor 1022.

The input device 1060 may provide input data generated by the selection of the electronic device 1000 to the processor unit 1020 through the input/output control unit 1040. In this case, the input device 1060 may include a keypad including at least one hardware button, a touch pad sensing touch information, and the like. For example, the input device 1060 may provide touch information such as touch, touch movement, and touch release sensed through the touch pad to the processor 1022 through the input/output control unit 1040.

FIG. 16 is a conceptual diagram illustrating an IoT network system 2000.

Referring to FIG. 16, an IoT network system 2000 may include a plurality of IoT devices 2100, 2120, 2140, and 2160, an AP 2200, a gateway 2250, a wireless network 2300, and a server 2400. The IoT may refer to a network between objects using wired/wireless communications.

Each of the IoT devices 2100, 2120, 2140, and 2160 may form a group according to characteristics of each IoT device. For example, each of the IoT devices may be grouped into a home gadget group 2100, a home appliance/furniture group 2120, an entertainment group 2140, a vehicle group 2160, or the like. A plurality of IoT devices 2100, 2120, and 2140 may be connected to a communication network or may be connected to other IoT devices through the AP 2200. The AP 2200 may be embedded in one IoT device. The gateway 2250 may change a protocol to get the AP 2200 to gain access to an external wireless network. The IoT devices 2100, 2120, and 2140 may be connected to an external communication network through the gateway 2250. The wireless network 2300 may include an Internet and/or a public network. A plurality of IoT devices 2100, 2120, 2140, and 2160 may be connected to the server 2400 providing a predetermined service through the wireless network 2300, and a user may use the service through at least one of the IoT devices 2100, 2120, 2140, and 2160.

According to embodiments, the plurality of IoT devices 2100, 2120, 2140, and 2160 may perform narrowband IoT communication, and accordingly, each of the IoT devices 2100, 2120, 2140, and 2160 may determine a delayed distance for channel estimation of the target subframe and estimate a channel of the target subframe by using reference signals up to the end subframe matching the determined delayed distance. Therefore, the IoT devices 2100, 2120, 2140, and 2160 may provide high-quality services to users by performing efficient and effective narrowband IoT communication.

Various changes in form and details may be made therein without departing from the scope of the following claims.

## Claims

1. An operation method of a user equipment performing narrowband Internet of Things-based communication, the operation method comprising:

   determining a delayed distance based on at least one of a channel characteristic and a channel estimation technique-related coefficient;
   estimating, with respect to a time axis, a channel of a target subframe using a plurality of reference signals, wherein the plurality of reference signals are comprised in subframes from a start subframe prior to the target subframe to an end subframe corresponding to a determined delayed distance after the target subframe; and
   decoding the target subframe based on the estimated channel.

2. The operation method of claim 1, wherein the channel characteristic comprises a residual frequency offset between a transmitted downlink signal transmitted from a transmitting side and a downlink signal received at the user equipment, which is a receiving side.

3. The operation method of claim 2, wherein the determining of the delayed distance comprises determining the residual frequency offset based on a signal to noise ratio of the downlink signal.

4. The operation method of claim 2 or claim 3, wherein

   the channel estimation technique-related coefficient comprises a coefficient related to an infinite impulse response, IIR, filter, and
   the estimating of the channel of the target subframe is performed by using the IIR filter.

5. The operation method of any preceding claim, wherein the determining of the delayed distance comprises determining the delayed distance based on a residual frequency offset and a coefficient with respect to an IIR filter.

6. The operation method of any preceding claim, wherein, in the estimating of the channel of the target subframe, the channel of the target subframe is estimated by applying values based on infinite impulse response, IIR, coefficients to channel estimates associated with the plurality of reference signals and sequentially summing over results of the applying.

7. The operation method of any of claims 1-3, wherein the estimating of the channel of the target subframe comprises:

   determining at least one window from the subframes; and
   estimating the channel for the target subframe by using the at least one window and a moving average filter.

8. The operation method of claim 7, wherein the determining at least one window comprises classifying subframes in which the plurality of reference signals are arranged from among the subframes.

9. The operation method of any of claims 1-3, 7 or 8, wherein, in the estimating of the channel of the target subframe, the channel of the target subframe is estimated by averaging channel estimates associated with a plurality of windows determined from the subframes.

**10.** The operation method of any preceding claim, wherein the plurality of reference signals are arranged in some of the subframes.

**11.** The operation method of any preceding claim, wherein the determining of the delayed distance comprises adjusting the determined delayed distance to reduce power loss in the estimating the channel of the target subframe.

**12.** The operation method of any preceding claim, wherein, in the determining of the delayed distance, the delayed distance is determined further based on a feedback transmission deadline when a signal comprised in the target subframe is of a type that requires reception feedback to a transmitting side.

**13.** The operation method of any preceding claim, wherein, in the estimating of the channel of the target subframe, a first weight applied to a first channel estimate associated with a first reference signal arranged before the target subframe among the plurality of reference signals is different from a second weight applied to a second channel estimate associated with a second reference signal arranged after the target subframe among the plurality of reference signals.

**14.** A user equipment configured to perform a narrowband Internet of Things-based communication, the user equipment comprising:

a transceiver configured to receive a downlink signal comprising a plurality of subframes through a channel; and
a processor configured to use reference signals up to an end subframe corresponding to a delayed distance after a target subframe with respect to a time axis for channel estimation of the target subframe among the plurality of subframes.

**15.** The user equipment of claim 14, wherein the processor is configured to determine the delayed distance based on a residual frequency offset between a transmission side of the downlink signal and the user equipment.

FIG. 1

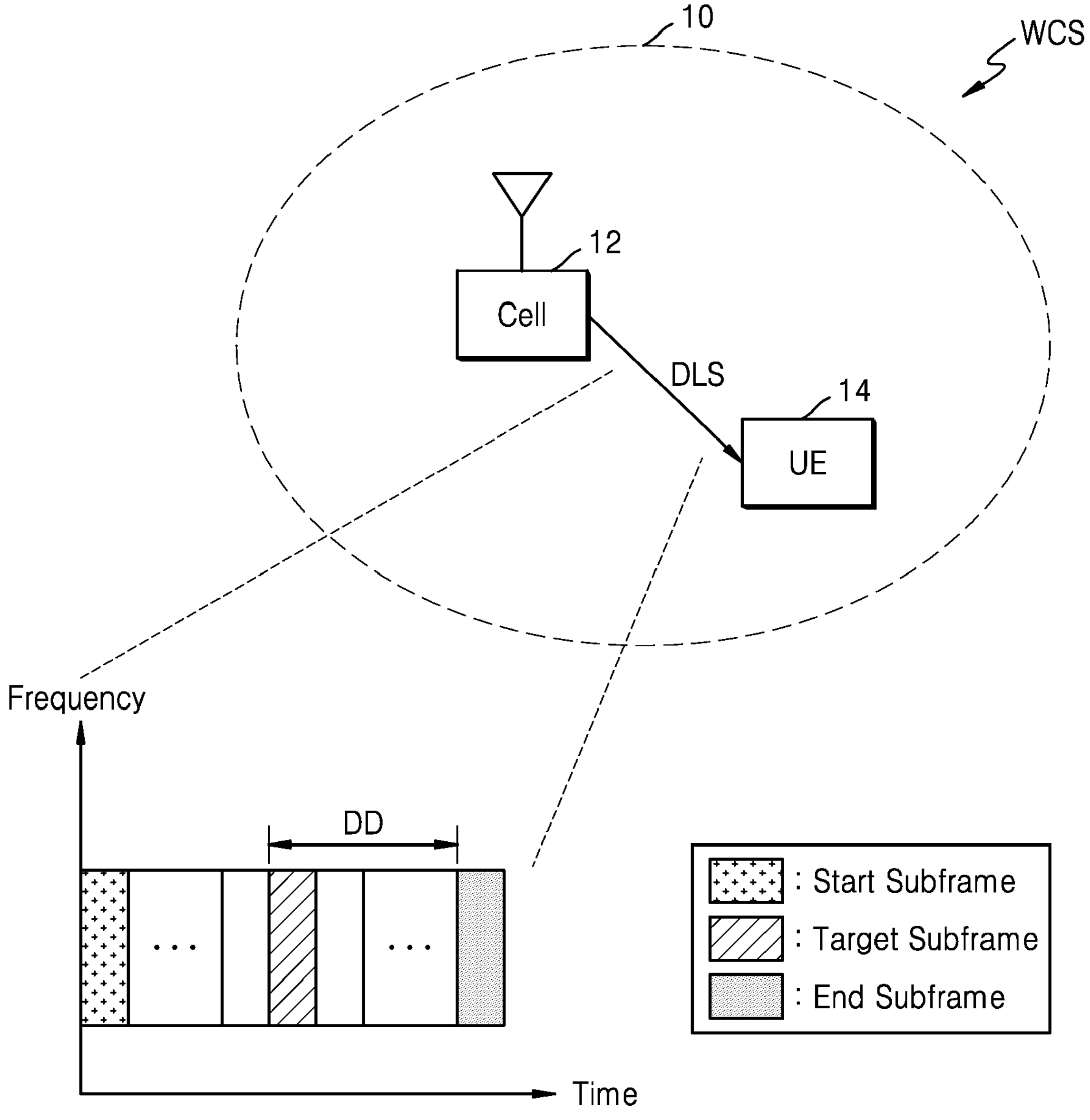
10
WCS
12
Cell
DLS
14
UE
Frequency
DD
Time
: Start Subframe
: Target Subframe
: End Subframe

FIG. 2

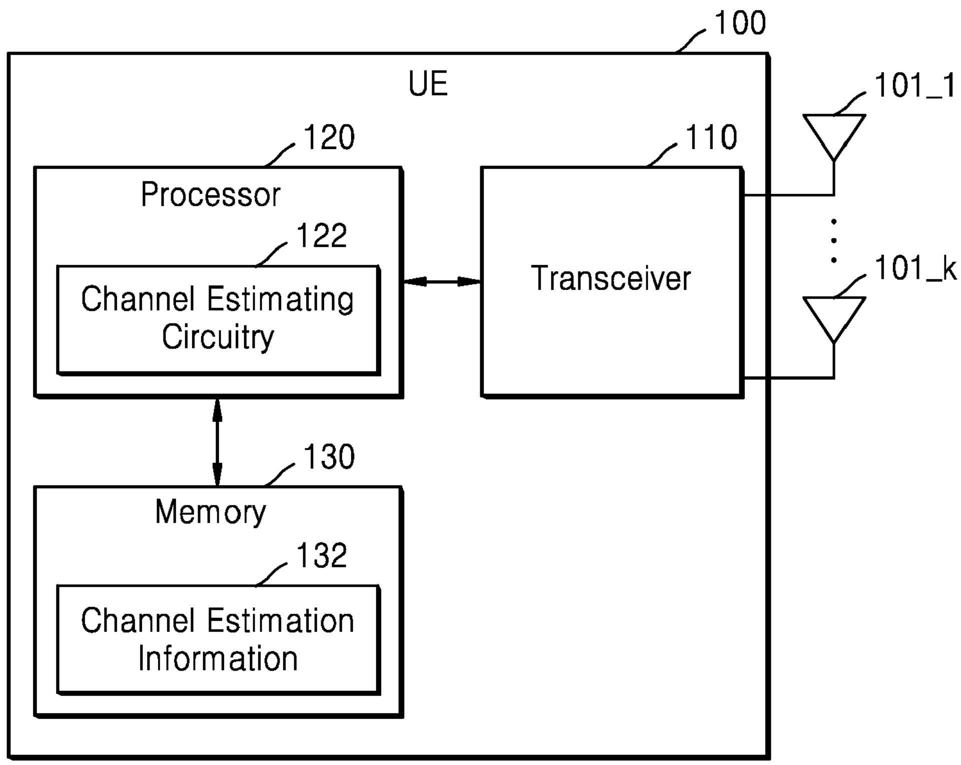
100
UE
101_1
120
110
Processor
122
Channel Estimating Circuitry
Transceiver
101_k
130
Memory
132
Channel Estimation Information

FIG. 3

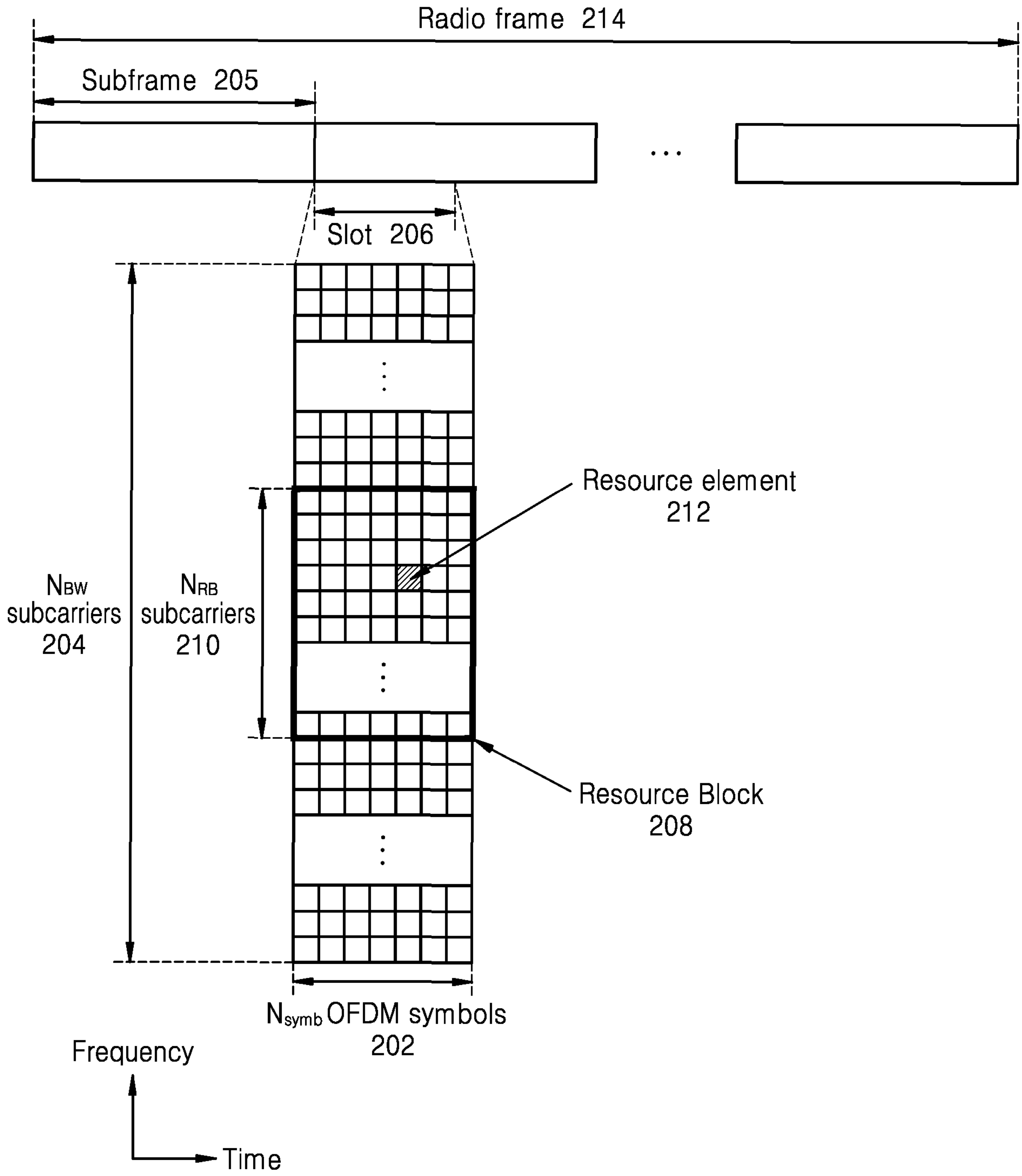
Radio frame 214
Subframe 205
...
Slot 206
Resource element 212
NBW subcarriers 204
NRB subcarriers 210
Resource Block 208
Nsymb OFDM symbols 202
Frequency
Time

FIG. 4

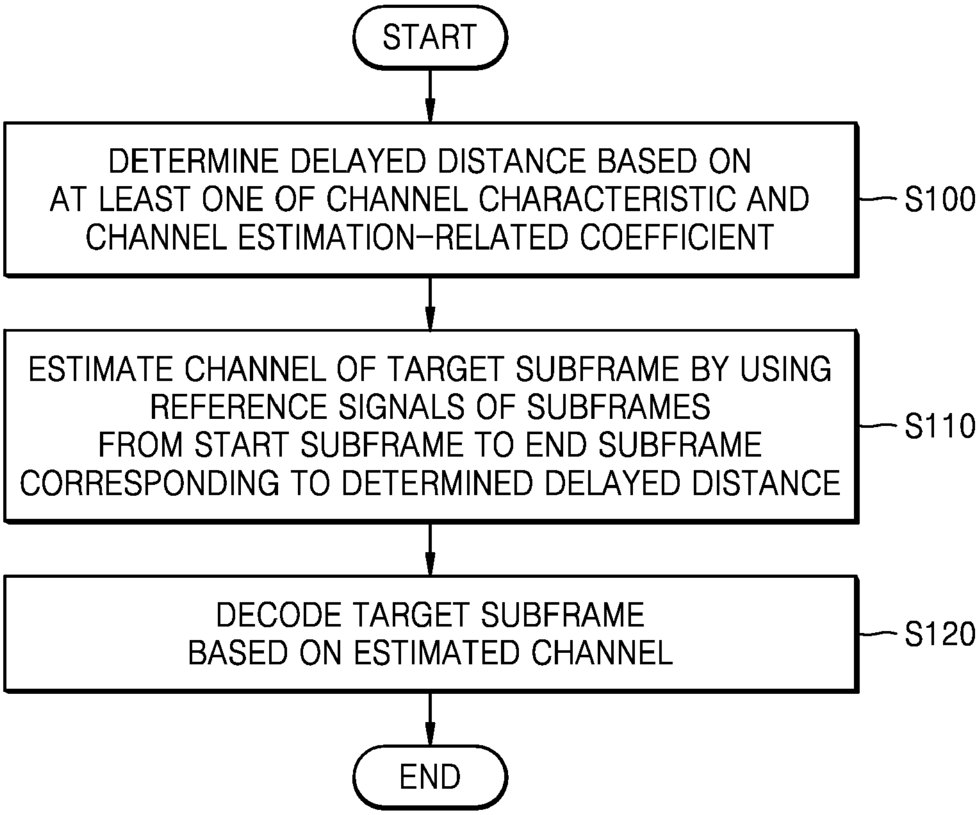
START
DETERMINE DELAYED DISTANCE BASED ON AT LEAST ONE OF CHANNEL CHARACTERISTIC AND CHANNEL ESTIMATION-RELATED COEFFICIENT
S100
ESTIMATE CHANNEL OF TARGET SUBFRAME BY USING REFERENCE SIGNALS OF SUBFRAMES FROM START SUBFRAME TO END SUBFRAME CORRESPONDING TO DETERMINED DELAYED DISTANCE
S110
DECODE TARGET SUBFRAME BASED ON ESTIMATED CHANNEL
S120
END

FIG. 5

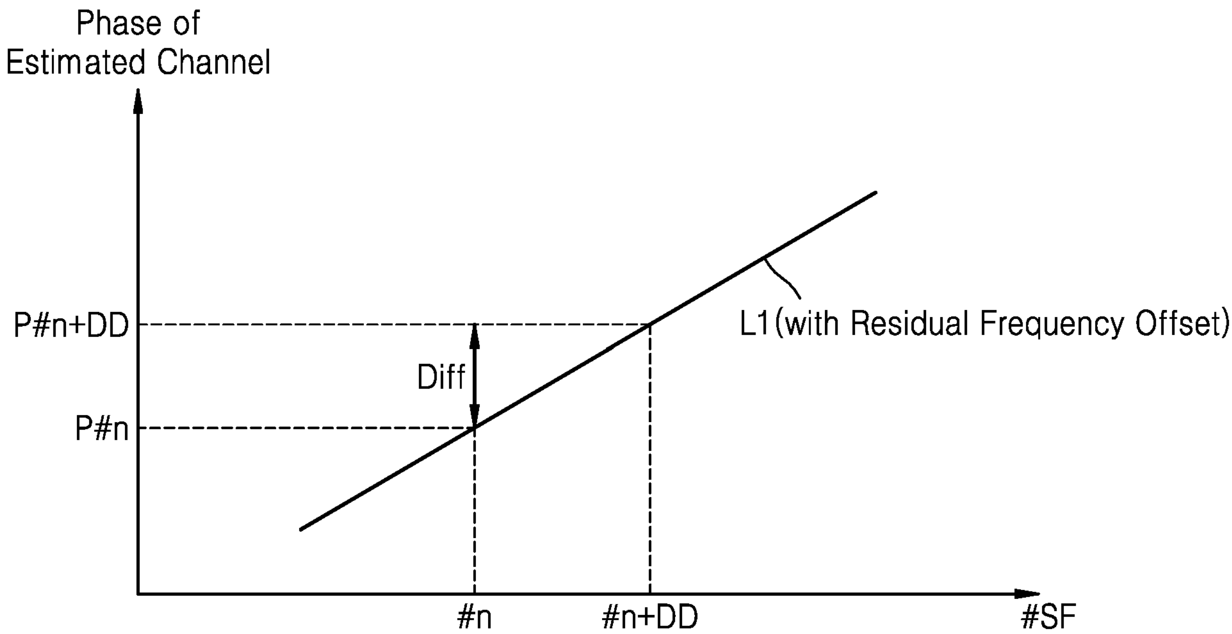
Phase of
Estimated Channel
P#n+DD
Diff
P#n
L1(with Residual Frequency Offset)
#n
#n+DD
#SF

FIG. 6A

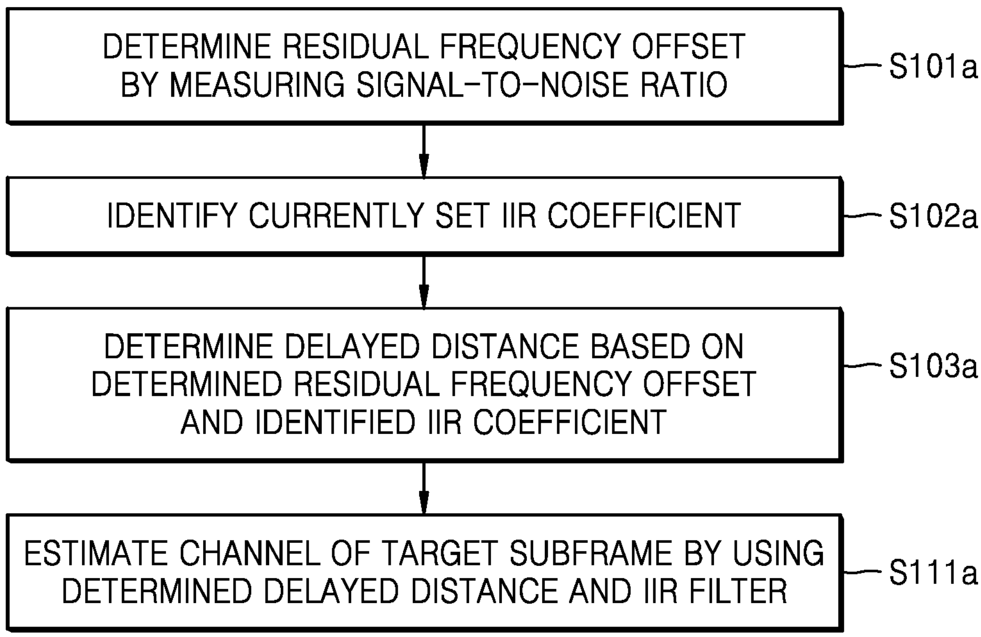
DETERMINE RESIDUAL FREQUENCY OFFSET BY MEASURING SIGNAL-TO-NOISE RATIO
S101a
IDENTIFY CURRENTLY SET IIR COEFFICIENT
S102a
DETERMINE DELAYED DISTANCE BASED ON DETERMINED RESIDUAL FREQUENCY OFFSET AND IDENTIFIED IIR COEFFICIENT
S103a
ESTIMATE CHANNEL OF TARGET SUBFRAME BY USING DETERMINED DELAYED DISTANCE AND IIR FILTER
S111a

# FIG. 6B

TB1

| Residual Frequency Offset Range | IIR Coefficient | Delayed Distance |
|---|---|---|
| R11 | 1/4 | V111 |
| | 1/8 | V211 |
| | 1/16 | V311 |
| R21 | 1/4 | V121 |
| | 1/8 | V221 |
| | 1/16 | V321 |
| ⋮ | | |
| Rm1 | 1/4 | V1m1 |
| | 1/8 | V2m1 |
| | 1/16 | V3m1 |

FIG. 7A

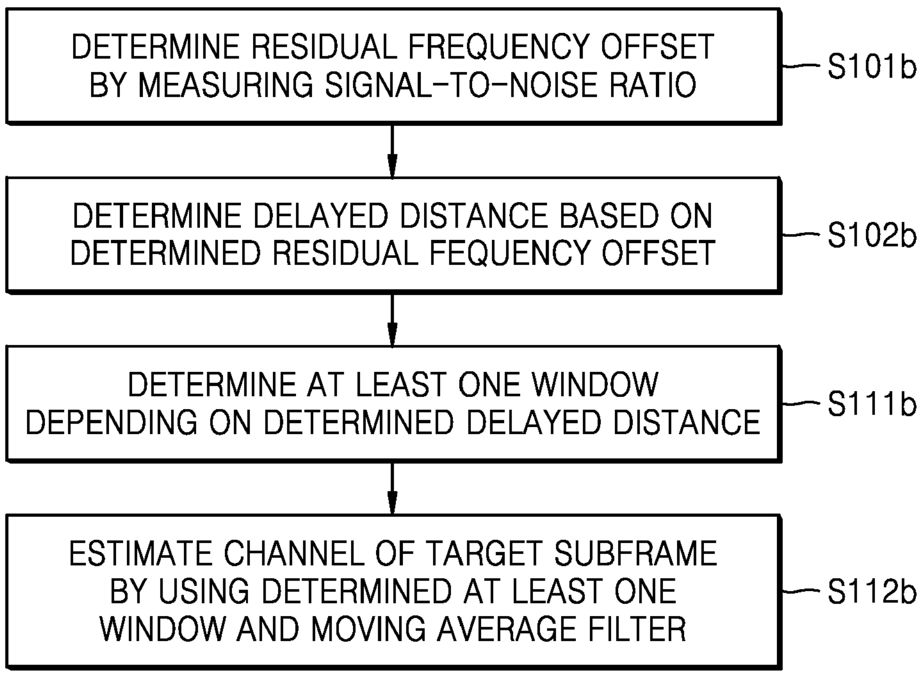
DETERMINE RESIDUAL FREQUENCY OFFSET BY MEASURING SIGNAL-TO-NOISE RATIO
S101b
DETERMINE DELAYED DISTANCE BASED ON DETERMINED RESIDUAL FEQUENCY OFFSET
S102b
DETERMINE AT LEAST ONE WINDOW DEPENDING ON DETERMINED DELAYED DISTANCE
S111b
ESTIMATE CHANNEL OF TARGET SUBFRAME BY USING DETERMINED AT LEAST ONE WINDOW AND MOVING AVERAGE FILTER
S112b

# FIG. 7B

TB2

| Residual Frequency Offset Range | Delayed Distance |
|---|---|
| R12 | V12 |
| R22 | V22 |
| ⋮ | |
| Rp2 | Vp2 |

FIG. 8A

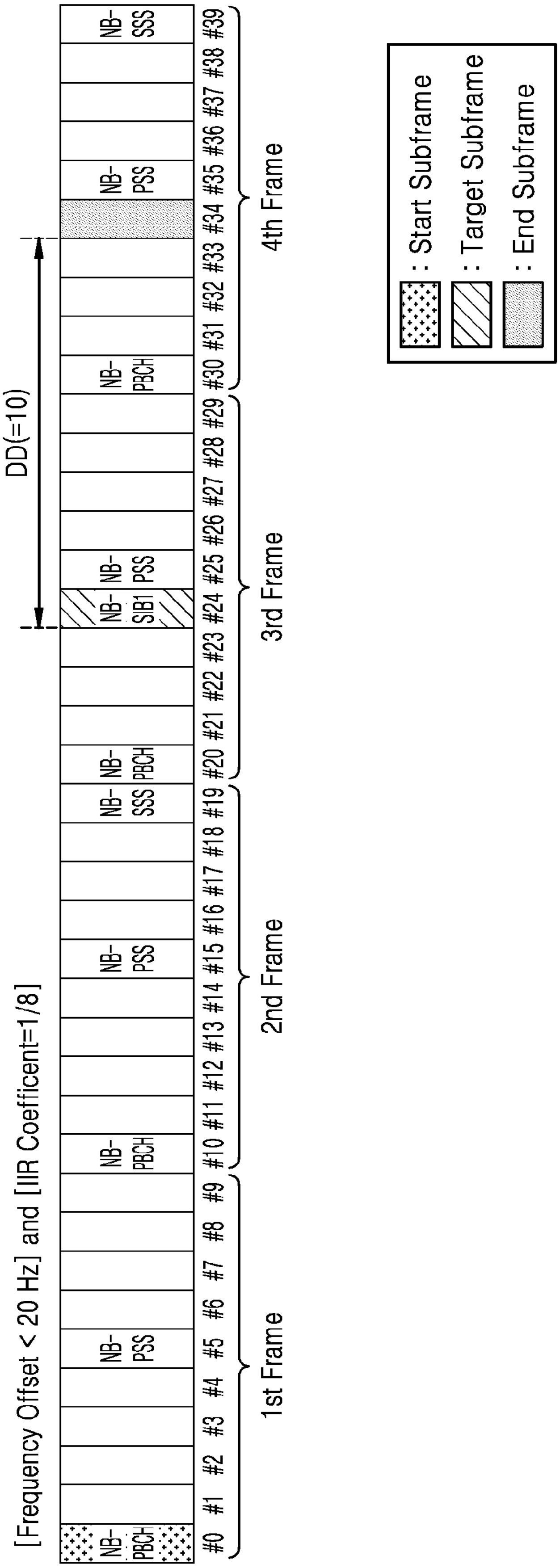
[Frequency Offset < 20 Hz] and [IIR Coefficent=1/8]
NB-PBCH
NB-PSS
NB-PBCH
NB-PSS
NB-SSS
NB-PBCH
NB-SIB1
NB-PSS
NB-PBCH
NB-PSS
NB-SSS
DD(=10)
#0 #1 #2 #3 #4 #5 #6 #7 #8 #9 #10 #11 #12 #13 #14 #15 #16 #17 #18 #19 #20 #21 #22 #23 #24 #25 #26 #27 #28 #29 #30 #31 #32 #33 #34 #35 #36 #37 #38 #39
1st Frame
2nd Frame
3rd Frame
4th Frame
: Start Subframe
: Target Subframe
: End Subframe

FIG. 8B

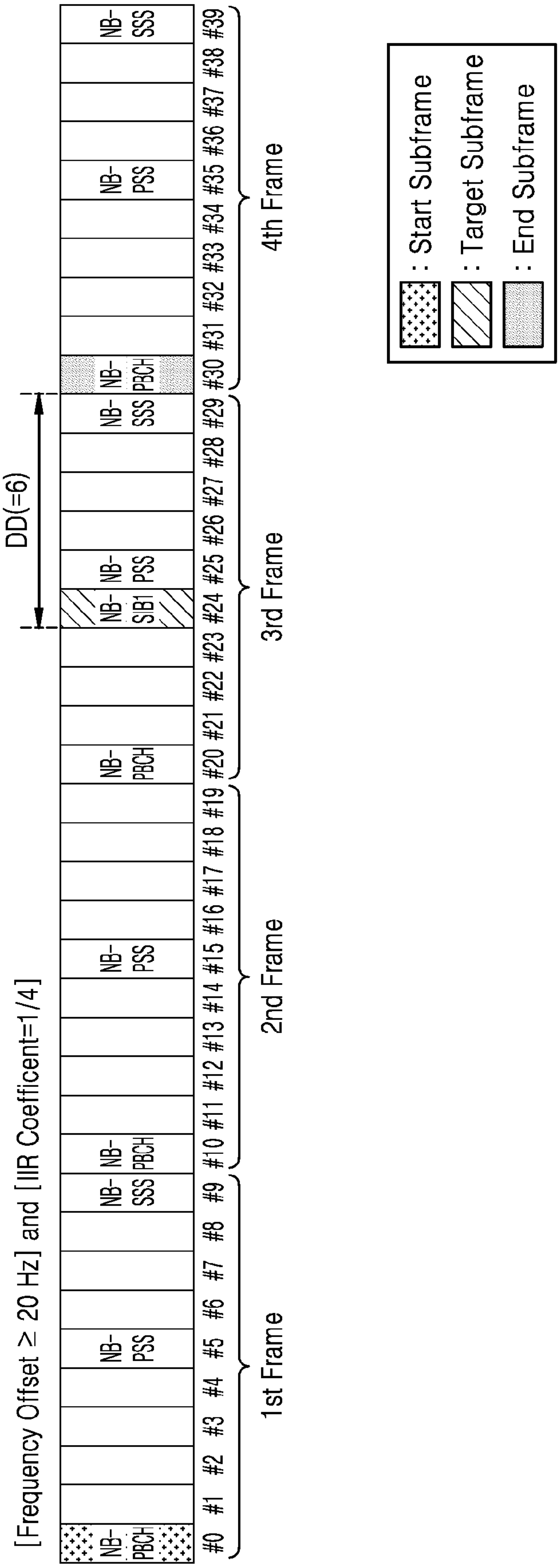
[Frequency Offset ≥ 20 Hz] and [IIR Coefficent=1/4]
DD(=6)
NB-PBCH
NB-PSS
NB-SSS
NB-SIB1
#0 #1 #2 #3 #4 #5 #6 #7 #8 #9
#10 #11 #12 #13 #14 #15 #16 #17 #18 #19
#20 #21 #22 #23 #24 #25 #26 #27 #28 #29
#30 #31 #32 #33 #34 #35 #36 #37 #38 #39
1st Frame
2nd Frame
3rd Frame
4th Frame
: Start Subframe
: Target Subframe
: End Subframe

FIG. 9A

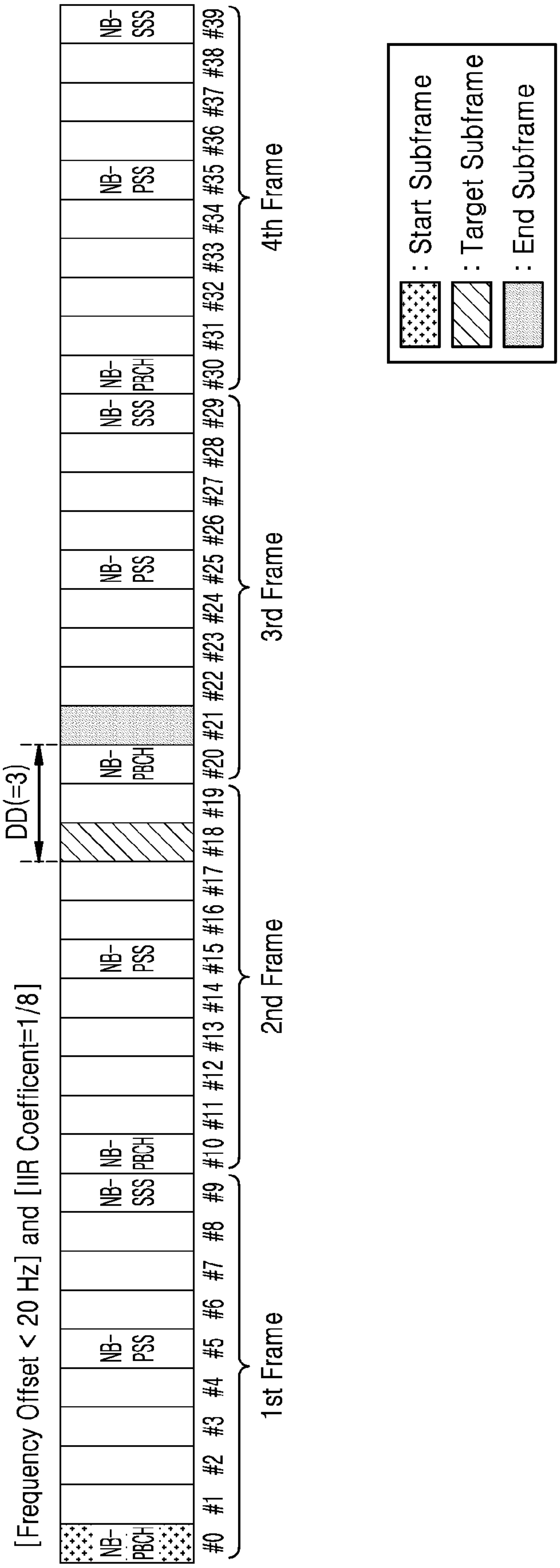
[Frequency Offset < 20 Hz] and [IIR Coefficent=1/8]
DD(=3)
NB-PBCH
NB-PSS
NB-SSS
NB-PBCH
NB-PSS
NB-PBCH
NB-PSS
NB-SSS
NB-PBCH
NB-PSS
NB-SSS
#0 #1 #2 #3 #4 #5 #6 #7 #8 #9 #10 #11 #12 #13 #14 #15 #16 #17 #18 #19 #20 #21 #22 #23 #24 #25 #26 #27 #28 #29 #30 #31 #32 #33 #34 #35 #36 #37 #38 #39
1st Frame
2nd Frame
3rd Frame
4th Frame
: Start Subframe
: Target Subframe
: End Subframe

FIG. 9B

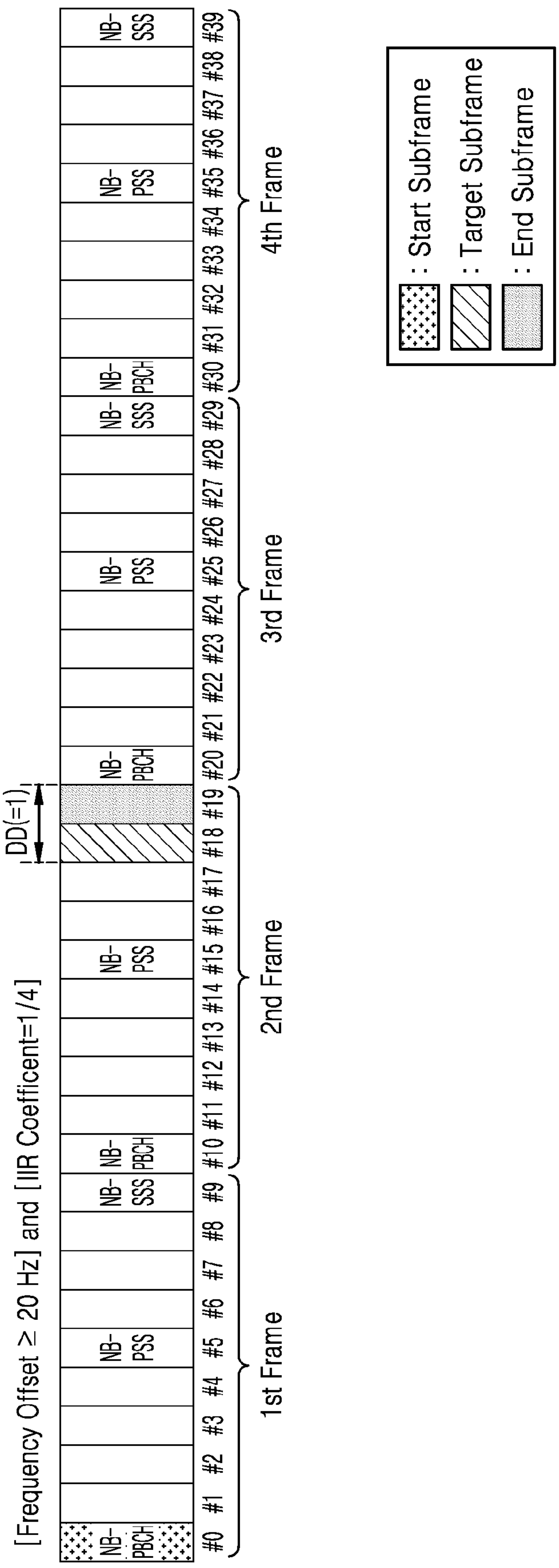
[Frequency Offset ≥ 20 Hz] and [IIR Coefficent=1/4]
DD(=1)
NB-PBCH
NB-PSS
NB-SSS
NB-PBCH
NB-PSS
NB-PBCH
NB-PSS
NB-SSS
NB-PBCH
NB-PSS
NB-SSS
#0 #1 #2 #3 #4 #5 #6 #7 #8 #9 #10 #11 #12 #13 #14 #15 #16 #17 #18 #19 #20 #21 #22 #23 #24 #25 #26 #27 #28 #29 #30 #31 #32 #33 #34 #35 #36 #37 #38 #39
1st Frame
2nd Frame
3rd Frame
4th Frame
: Start Subframe
: Target Subframe
: End Subframe

FIG. 10A

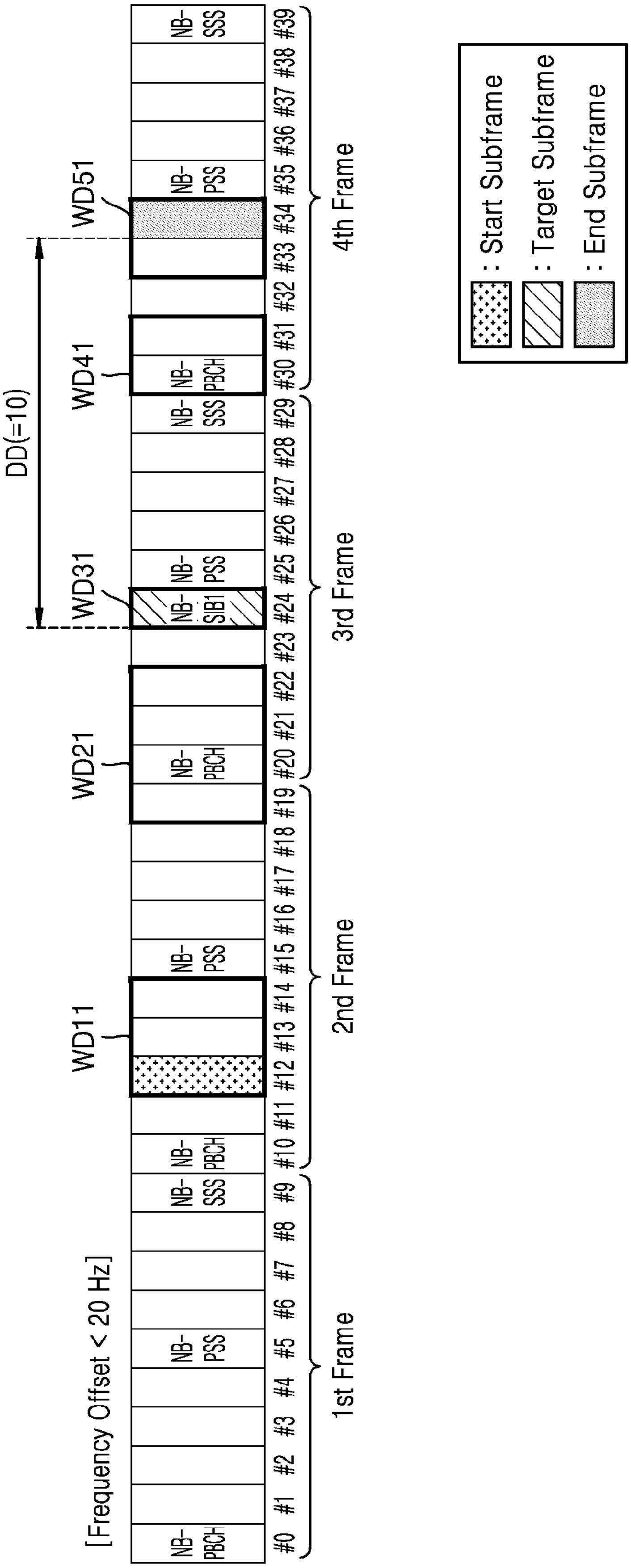
[Frequency Offset < 20 Hz]
DD(=10)
WD11
WD21
WD31
WD41
WD51
NB-PBCH
NB-PSS
NB-SSS
NB-SIB1
#0 #1 #2 #3 #4 #5 #6 #7 #8 #9 #10 #11 #12 #13 #14 #15 #16 #17 #18 #19 #20 #21 #22 #23 #24 #25 #26 #27 #28 #29 #30 #31 #32 #33 #34 #35 #36 #37 #38 #39
1st Frame
2nd Frame
3rd Frame
4th Frame
: Start Subframe
: Target Subframe
: End Subframe

FIG. 10B

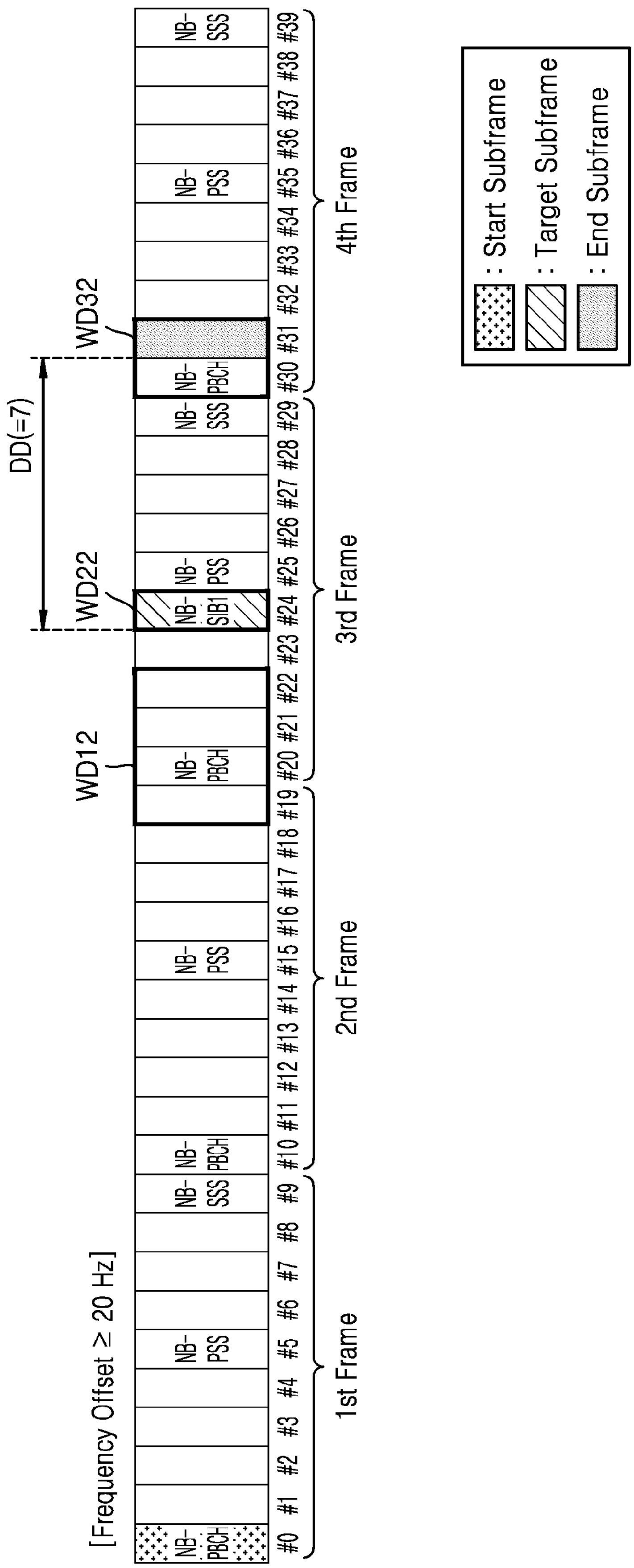
[Frequency Offset ≥ 20 Hz]
WD12
WD22
WD32
DD(=7)
NB-PBCH
NB-PSS
NB-SSS
NB-PBCH
NB-PSS
NB-PBCH
NB-SIB1
NB-PSS
NB-SSS
NB-PBCH
NB-PSS
NB-SSS
#0 #1 #2 #3 #4 #5 #6 #7 #8 #9 #10 #11 #12 #13 #14 #15 #16 #17 #18 #19 #20 #21 #22 #23 #24 #25 #26 #27 #28 #29 #30 #31 #32 #33 #34 #35 #36 #37 #38 #39
1st Frame
2nd Frame
3rd Frame
4th Frame
: Start Subframe
: Target Subframe
: End Subframe

FIG. 11A

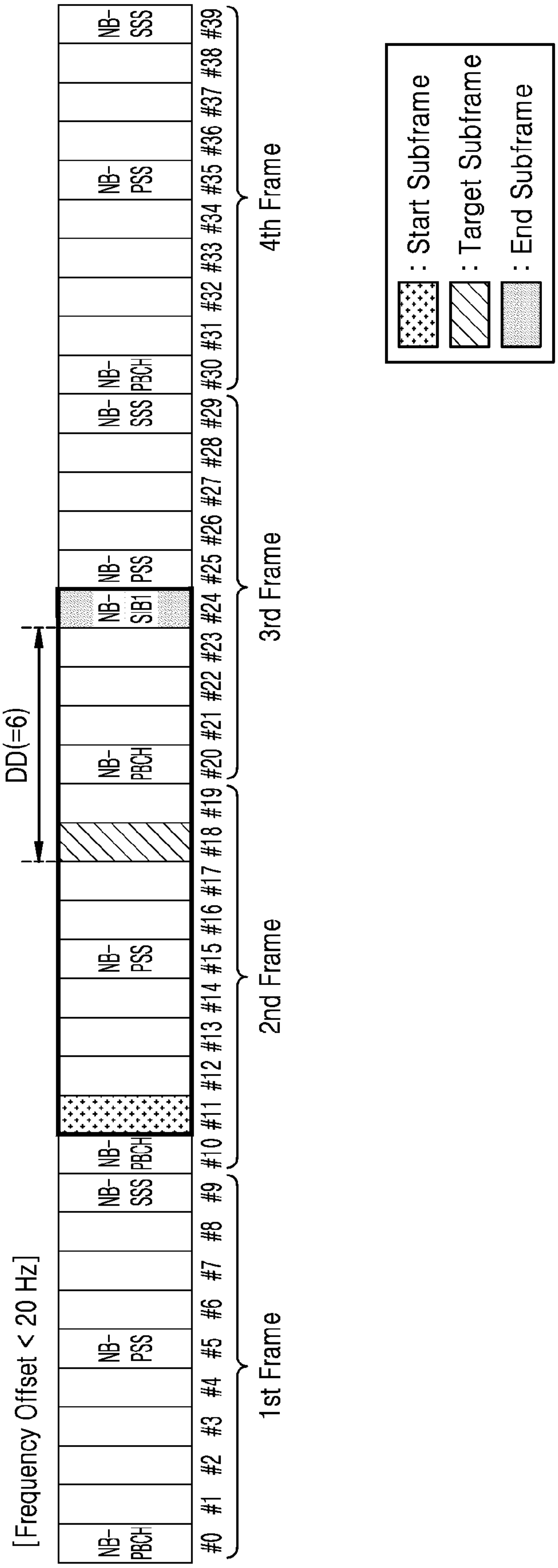
[Frequency Offset < 20 Hz]
DD(=6)
NB-PBCH
NB-PSS
NB-SSS
NB-SIB1
#0 #1 #2 #3 #4 #5 #6 #7 #8 #9 #10 #11 #12 #13 #14 #15 #16 #17 #18 #19 #20 #21 #22 #23 #24 #25 #26 #27 #28 #29 #30 #31 #32 #33 #34 #35 #36 #37 #38 #39
1st Frame
2nd Frame
3rd Frame
4th Frame
: Start Subframe
: Target Subframe
: End Subframe

FIG. 11B

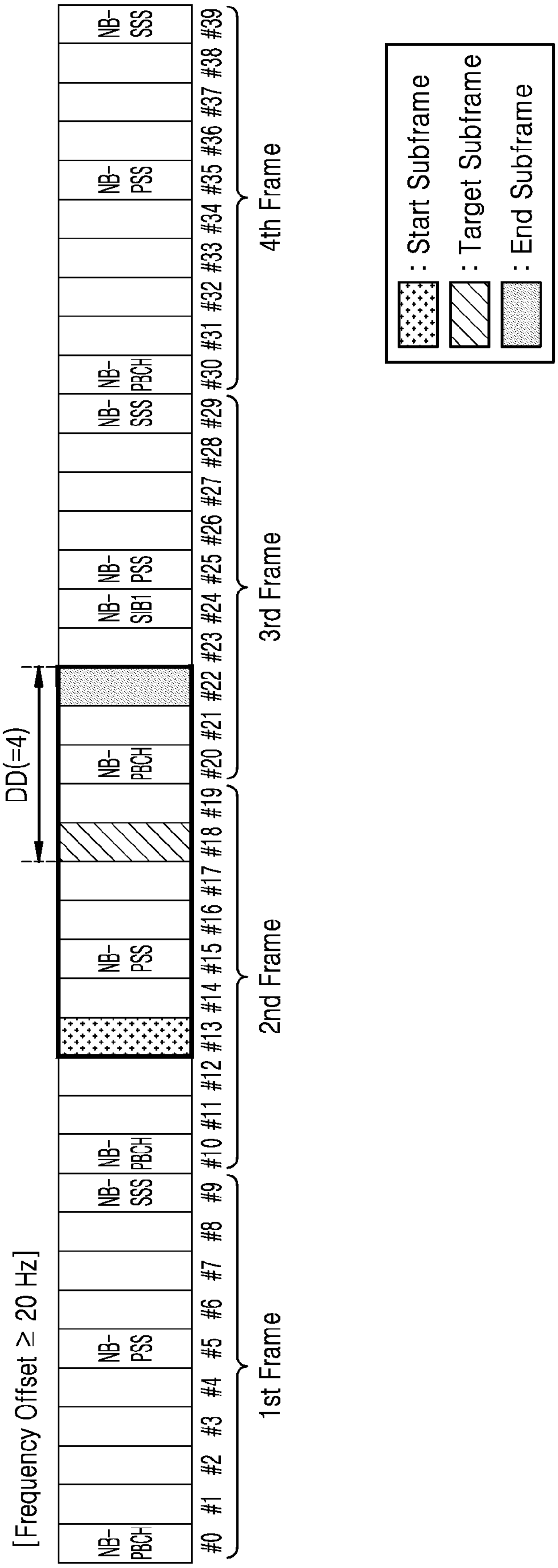

[Frequency Offset ≥ 20 Hz]
DD(=4)
NB-PBCH
NB-PSS
NB-SSS
NB-SIB1
#0 #1 #2 #3 #4 #5 #6 #7 #8 #9 #10 #11 #12 #13 #14 #15 #16 #17 #18 #19 #20 #21 #22 #23 #24 #25 #26 #27 #28 #29 #30 #31 #32 #33 #34 #35 #36 #37 #38 #39
1st Frame
2nd Frame
3rd Frame
4th Frame
: Start Subframe
: Target Subframe
: End Subframe

FIG. 12

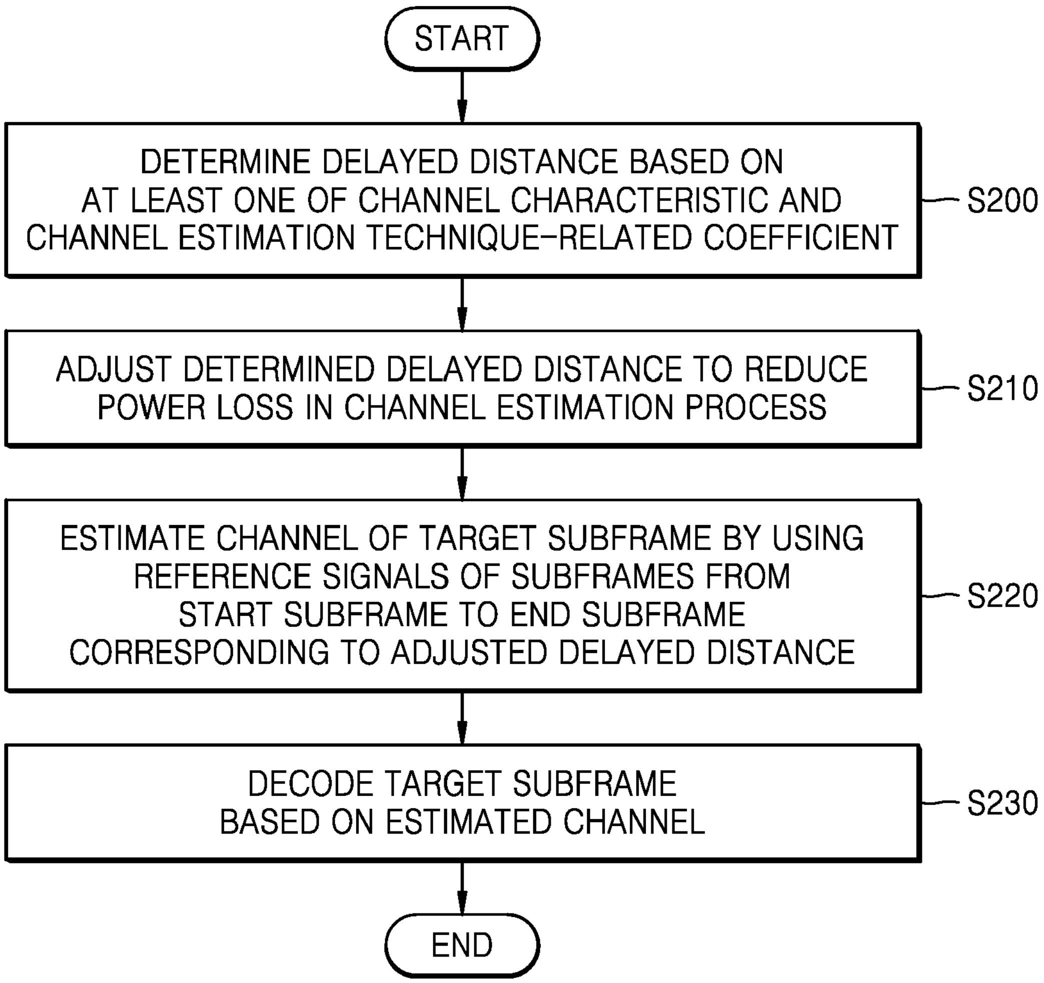
START
DETERMINE DELAYED DISTANCE BASED ON
AT LEAST ONE OF CHANNEL CHARACTERISTIC AND
CHANNEL ESTIMATION TECHNIQUE-RELATED COEFFICIENT
S200
ADJUST DETERMINED DELAYED DISTANCE TO REDUCE
POWER LOSS IN CHANNEL ESTIMATION PROCESS
S210
ESTIMATE CHANNEL OF TARGET SUBFRAME BY USING
REFERENCE SIGNALS OF SUBFRAMES FROM
START SUBFRAME TO END SUBFRAME
CORRESPONDING TO ADJUSTED DELAYED DISTANCE
S220
DECODE TARGET SUBFRAME
BASED ON ESTIMATED CHANNEL
S230
END

# FIG. 13

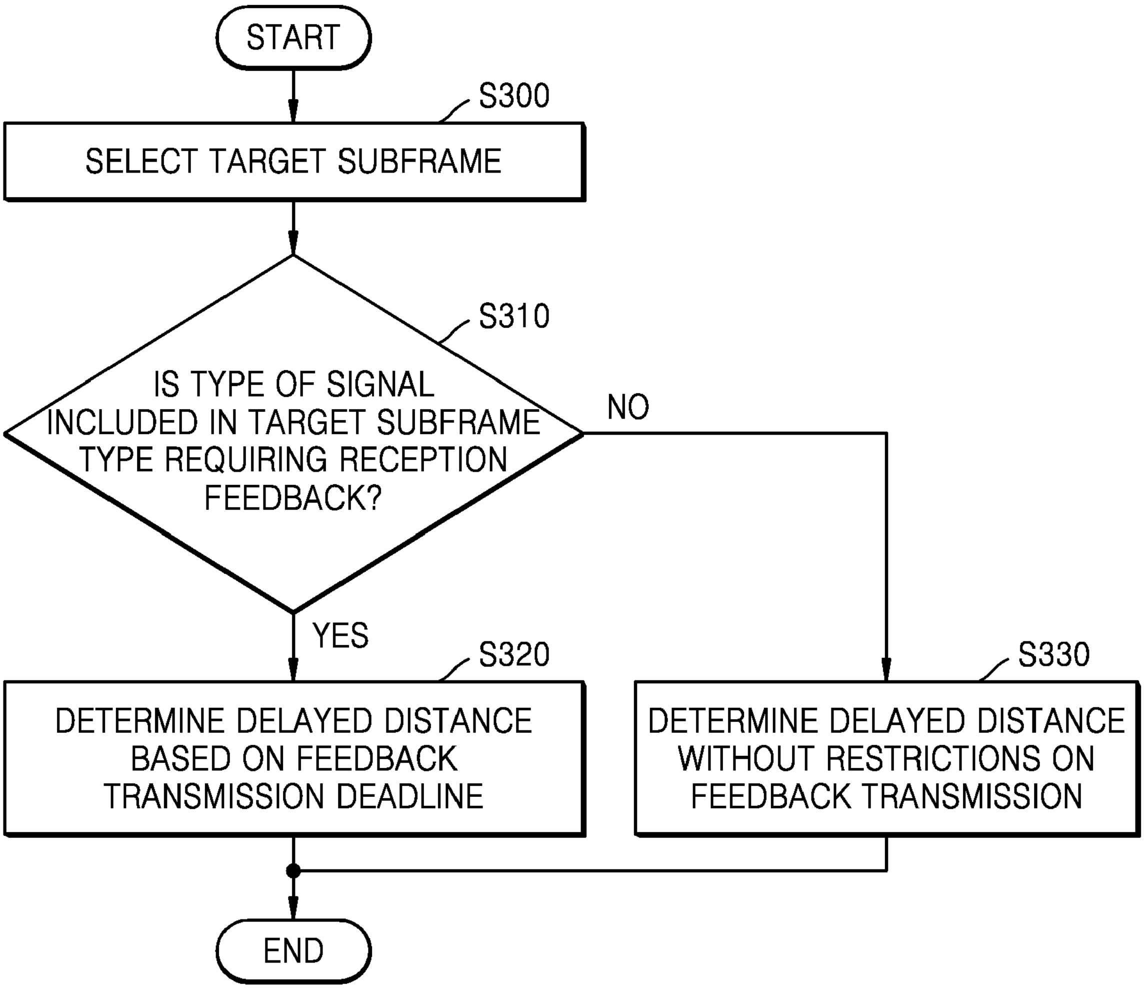
START
S300
SELECT TARGET SUBFRAME
S310
IS TYPE OF SIGNAL INCLUDED IN TARGET SUBFRAME TYPE REQUIRING RECEPTION FEEDBACK?
NO
YES
S320
DETERMINE DELAYED DISTANCE BASED ON FEEDBACK TRANSMISSION DEADLINE
S330
DETERMINE DELAYED DISTANCE WITHOUT RESTRICTIONS ON FEEDBACK TRANSMISSION
END

FIG. 14

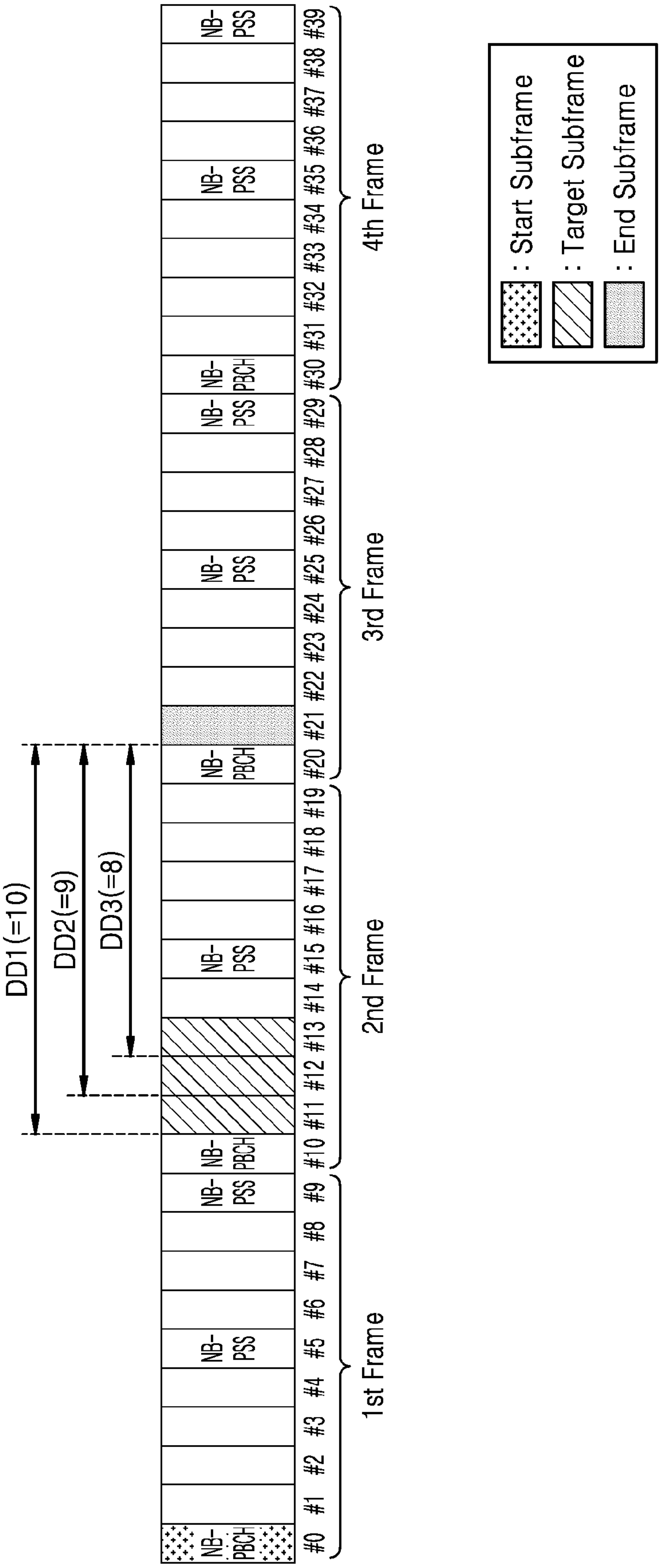
DD1(=10)
DD2(=9)
DD3(=8)
NB-PBCH
NB-PSS
NB-PSS NB-PBCH
#0 #1 #2 #3 #4 #5 #6 #7 #8 #9 #10 #11 #12 #13 #14 #15 #16 #17 #18 #19 #20 #21 #22 #23 #24 #25 #26 #27 #28 #29 #30 #31 #32 #33 #34 #35 #36 #37 #38 #39
1st Frame
2nd Frame
3rd Frame
4th Frame
: Start Subframe
: Target Subframe
: End Subframe

FIG. 15

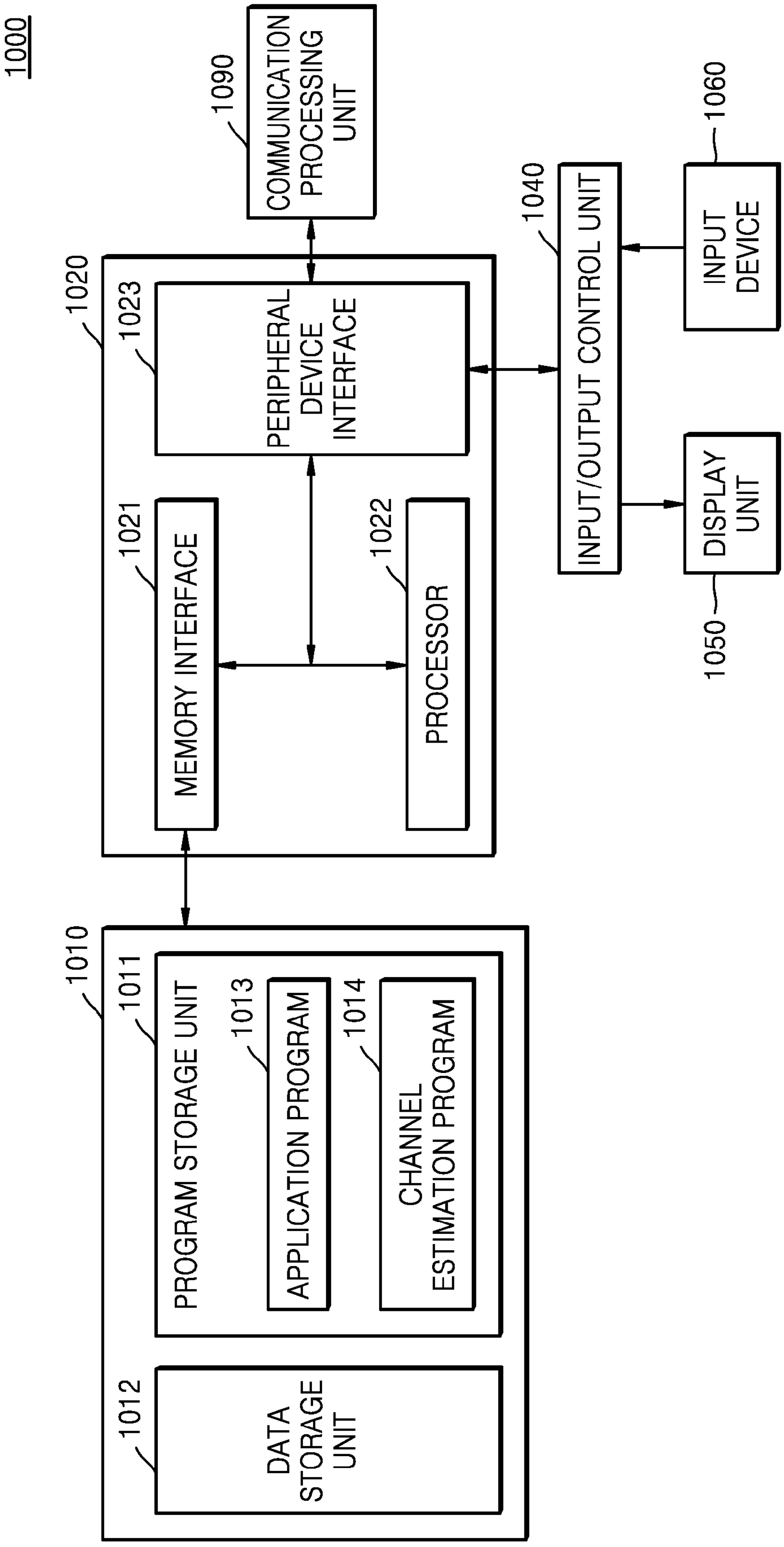
1000
1090
COMMUNICATION PROCESSING UNIT
1020
1023
PERIPHERAL DEVICE INTERFACE
1021
MEMORY INTERFACE
1022
PROCESSOR
1040
INPUT/OUTPUT CONTROL UNIT
1060
INPUT DEVICE
1050
DISPLAY UNIT
1010
1011
PROGRAM STORAGE UNIT
1013
APPLICATION PROGRAM
1014
CHANNEL ESTIMATION PROGRAM
1012
DATA STORAGE UNIT

FIG. 16

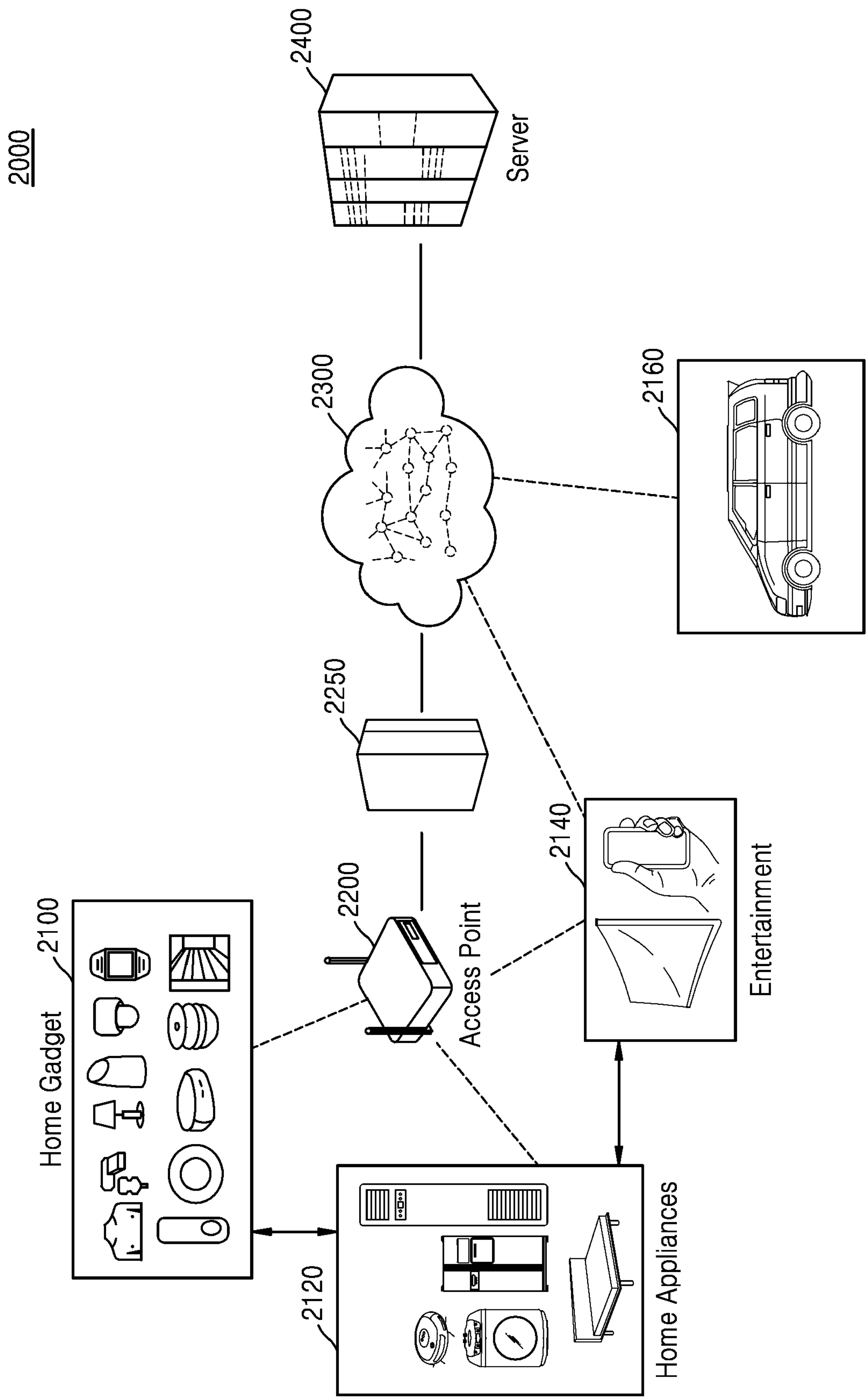
2000
2400
Server
2300
2160
Vehicle
2250
2200
Access Point
2100
Home Gadget
2140
Entertainment
2120
Home Appliances

Europäisches Patentamt
European Patent Office
Office européen des brevets

# EUROPEAN SEARCH REPORT

Application Number
EP 24 16 4806

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 105 977 B1 (NOKIA CORP [FI]) 13 October 2004 (2004-10-13) * paragraphs [0034], [0049] * * paragraph [0059] - paragraph [0062] * ----- | 1-15 | INV. H04L25/02 |
| X | US 2019/044660 A1 (JI ZHU [US] ET AL) 7 February 2019 (2019-02-07) * paragraph [0044] - paragraph [0046] * * paragraph [0077] * ----- | 1-15 | |
| X | WO 2013/134588 A1 (QUALCOMM INC [US]) 12 September 2013 (2013-09-12) * paragraph [0072] - paragraph [0078] * ----- | 1-15 | |
| A | US 2005/018641 A1 (ZHAO CHUNMING [CN] ET AL) 27 January 2005 (2005-01-27) * paragraph [0014] - paragraph [0022] * ----- | 7,8 | |

TECHNICAL FIELDS SEARCHED (IPC)

H04L

The present search report has been drawn up for all claims

3

| Place of search | Date of completion of the search | Examiner |
|---|---|---|
| Munich | 2 September 2024 | Epple, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 16 4806

This annex lists the patent family members relating to the patent documents cited in the above-mentioned European search report. The members are as contained in the European Patent Office EDP file on The European Patent Office is in no way liable for these particulars which are merely given for the purpose of information.

02-09-2024

| Patent document cited in search report | Publication date | Patent family member(s) | Publication date |
|---|---|---|---|
| EP 1105977 B1 | 13-10-2004 | AT E279815 T1 | 15-10-2004 |
| | | AU 5513599 A | 14-03-2000 |
| | | CN 1324522 A | 28-11-2001 |
| | | DE 69921155 T2 | 23-02-2006 |
| | | EP 1105977 A1 | 13-06-2001 |
| | | JP 2002523961 A | 30-07-2002 |
| | | KR 20010072840 A | 31-07-2001 |
| | | US 6680967 B1 | 20-01-2004 |
| | | WO 0011798 A1 | 02-03-2000 |
| US 2019044660 A1 | 07-02-2019 | CN 109391569 A | 26-02-2019 |
| | | US 2019044660 A1 | 07-02-2019 |
| WO 2013134588 A1 | 12-09-2013 | CN 104160671 A | 19-11-2014 |
| | | EP 2823612 A1 | 14-01-2015 |
| | | JP 5990601 B2 | 14-09-2016 |
| | | JP 2015529021 A | 01-10-2015 |
| | | KR 20140133594 A | 19-11-2014 |
| | | WO 2013134588 A1 | 12-09-2013 |
| US 2005018641 A1 | 27-01-2005 | CN 1337835 A | 27-02-2002 |
| | | US 2005018641 A1 | 27-01-2005 |
| | | WO 03021980 A1 | 13-03-2003 |

EPO FORM P0459

For more details about this annex : see Official Journal of the European Patent Office, No. 12/82